(19) **Europäisches Patentamt / European Patent Office / Office européen des brevets**

(11) **EP 4 082 738 B1**

(12) **EUROPEAN PATENT SPECIFICATION**

(45) Date of publication and mention
of the grant of the patent:
**26.02.2025 Bulletin 2025/09**

(21) Application number: **20904661.4**

(22) Date of filing: **06.11.2020**

(51) International Patent Classification (IPC):
**B29C 70/00** (2006.01)  **B29K 105/08** (2006.01)
**B32B 27/04** (2006.01)

(52) Cooperative Patent Classification (CPC):
**B29C 70/0035; C08J 5/042;** B29C 70/465;
B29C 70/48; C08J 2300/22; C08J 2300/24;
C08J 2323/26; C08J 2363/00; C08J 2365/00;
C08J 2371/00; C08J 2377/02

(86) International application number:
**PCT/JP2020/041509**

(87) International publication number:
**WO 2021/131347 (01.07.2021 Gazette 2021/26)**

(54) **PREPREG, MOLDED ARTICLE, AND INTEGRALLY MOLDED ARTICLE**

PREPREG, FORMARTIKEL UND EINSTÜCKIG GEFORMTER ARTIKEL

PRÉIMPRÉGNÉ, ARTICLE MOULÉ, ET ARTICLE MOULÉ D'UN SEUL TENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.12.2019 JP 2019231593**

(43) Date of publication of application:
**02.11.2022 Bulletin 2022/44**

(73) Proprietor: **Toray Industries, Inc.**
**Tokyo 103-8666 (JP)**

(72) Inventors:
• **ONODERA, Miho**
**Iyo-gun, Ehime 791-3193 (JP)**
• **TAKEBE, Yoshiki**
**Iyo-gun, Ehime 791-3193 (JP)**
• **KONISHI, Daisuke**
**Nagoya-shi, Aichi 455-8502 (JP)**

• **NAITO, Yuta**
**Iyo-gun, Ehime 791-3193 (JP)**
• **NAKAYAMA, Yoshifumi**
**Iyo-gun, Ehime 791-3193 (JP)**
• **HONMA, Masato**
**Iyo-gun, Ehime 791-3193 (JP)**

(74) Representative: **Mewburn Ellis LLP**
**Aurora Building**
**Counterslip**
**Bristol BS1 6BX (GB)**

(56) References cited:
**EP-A1- 3 974 140        EP-A1- 3 974 141
WO-A1-2005/082982   WO-A1-2012/011487
WO-A2-2019/208586   JP-A- 2004 315 743
JP-A- 2006 049 878     JP-A- 2007 092 072
JP-A- 2008 007 618**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a prepreg including reinforcing fibers impregnated with a thermosetting resin, in which a thermoplastic resin exists on at least a part of a face of the fibers.

BACKGROUND ART

A fiber reinforced composite material contains a thermosetting resin used as a matrix and combined with reinforcing fibers such as carbon fibers or glass fibers. Although lightweight, such a fiber reinforced composite material excels in mechanical characteristics such as strength and stiffness, heat resistance, and in addition, corrosion resistance, and thus, is utilized in many fields such as aerospace, automobiles, railroad vehicles, ships, civil engineering and construction, and sports goods. However, such a fiber reinforced composite material is unsuitable for producing complicatedly shaped parts and structures in a single molding step. Additionally, in the above-mentioned applications, it is often desired that a member composed of a fiber reinforced composite material is produced, and then, integrated with a member of the same or different kind. Examples of techniques to be used to integrally combine a member of the same kind as or a different kind from a fiber reinforced composite material composed of reinforcing fibers and a thermosetting resin include a mechanical joining method using a bolt, rivet, bis, or the like, and a joining method using an adhesive. A mechanical joining method involves a step of preliminarily processing a part to be joined, for example, drilling, and thus, has a problem in that such a method leads to prolonging the time for production processes and increasing the production cost, and additionally, that such drilling leads to decreasing the material strength. A joining method using an adhesive involves an adhering step including an adhesive preparation operation and an adhesive application operation, also involves a curing step, and thus, has a problem in that such a method leads to prolonging the time for production processes, and does not afford sufficient satisfaction in the reliability of the adhesive strength.

Here, Patent Literature 1 discloses a method in which fiber reinforced composite materials composed of reinforcing fibers and a thermosetting resin are joined with an adhesive. Patent Literature 2 discloses a technique in which a fiber reinforced composite material composed of reinforcing fibers and a thermosetting resin and containing a thermoplastic resin on a face of the composite material is injection-molded integrally with a member formed of a thermoplastic resin. Patent Literature 3 discloses a prepreg that contains a layer composed of carbon fibers and a half-cured epoxy resin, and has a polyolefin film disposed on a face of the layer. Patent Literature 4 discloses the following: a prepreg composed of reinforcing fibers and a thermosetting resin, on a face of which prepreg, particles, a fiber, or a film, composed of a thermoplastic resin, are/is disposed; and a fiber reinforced composite material. The Patent Literature 5 is a further example of a prepreg comprising reinforcing fibers, a thermosetting resin, and a thermoplastic resin,wherein said reinforcing fibers are impregnated with said thermosetting resin and wherein said thermoplastic resin exists in at least a part of a face of said prepreg.

Citation List

Patent Literature

Patent Literature 1: JP2018-161801A
Patent Literature 2: JP10-138354A
Patent Literature 3: JP04-4107A
Patent Literature 4: JP08-259713A
Patent Literature 5: WO2012/011487A1

SUMMARY OF INVENTION

Technical Problem

According to Patent Literature 1, fiber reinforced composite materials composed of reinforcing fibers and a thermosetting resin are joined to each other with an adhesive. In general, a method in which members are adhered to each other with an adhesive takes time to cure the adhesive, and in addition, the joint strength depends on the strength of the adhesive itself in some cases.

Patent Literature 2 discloses a technique in which a thermoplastic resin film is laminated on a face of a prepreg composed of reinforcing fibers and a thermosetting resin, the resulting laminate is cured under heating·and pressing to obtain a fiber reinforced composite material containing a prepreg integrated with a thermoplastic resin layer, and then, a member containing a thermoplastic resin is injection-molded integrally with the thermoplastic resin layer of the face of the fiber reinforced composite material. However, such a fiber reinforced composite material has a cured thermosetting resin, and hence, is rigid, being difficult to form in a mold having a complicated face shape. Because of this, such a material is limited to application to a mold having a simple planar shape. In addition, such a fiber reinforced composite material contains a cured thermosetting resin, hence exhibits lost adhesiveness in a face thereof, is difficult to accurately dispose in a mold, and is difficult to efficiently reinforce and stiffen at an intended position.

Patent Literature 3 discloses a fiber reinforced composite material obtained as follows: a polyolefin film is laminated onto a face of a layer composed of carbon fibers and a half-cured epoxy resin to obtain a prepreg, and a plurality of the prepregs are laminated, and then cured in an autoclave to obtain a fiber reinforced composite material in which polyolefin film layers and carbon fiber-cured epoxy layers are laminated alternately. The purpose is to enhance the interlaminar fracture toughness by virtue of the thermoplastic resin existing between layers and having high toughness. Unlike a prepreg according to the present invention, the purpose does not consist in the thermal weldability of the thermoplastic resin layer to another member. In addition, there is no quantitative description of, for example, a degree of cure of the half-cured epoxy, and no mention of selectivity based on a degree of cure.

Patent Literature 4 discloses the following: a prepreg composed of reinforcing fibers and a thermosetting resin, on a face of which prepreg, particles, a fiber, or a film, composed of a thermoplastic resin, are/is disposed; and a fiber reinforced composite material. As with Patent Literature 3, the purpose is to enhance the interlaminar fracture toughness by virtue of the thermoplastic resin having high toughness, and unlike a prepreg according to the present invention, does not consist in thermal welding.

As above-mentioned, no conventional technology has paid attention to the handleability of a prepreg. In view of this, a problem to be addressed by the present invention is to provide a prepreg, a molded article, and an integrally molded article, wherein the prepreg exhibits suitable flexibility and adhesiveness, excels in formability on a complicated mold face and adhesion to a mold face, causes no positional shift, and can be efficiently reinforced and stiffened at an intended position.

Solution to Problem

The above-mentioned problems can be solved with a prepreg including (A) reinforcing fibers, (B) a thermosetting resin, and (C) a thermoplastic resin, wherein the (A) reinforcing fibers are impregnated with the (B) thermosetting resin, wherein the (C) thermoplastic resin exists in at least a part of a face of the prepreg, and wherein the (B) thermosetting resin has a peak at 30°C or more and 100°C or less on a loss tangent (tan $\delta$) curve obtained by dynamic mechanical analysis (DMA).

Advantageous Effects of Invention

The present invention makes it possible to obtain a prepreg that exhibits suitable flexibility and adhesiveness, excels in formability on a complicated mold face and adhesion to a mold face, makes it more difficult to cause a positional shift, and can be efficiently reinforced and stiffened at an intended position. The present invention also makes it possible to obtain a molded article and an integrally molded article, for each of which a prepreg according to the present invention is used.

BRIEF DESCRIPTION OF DRAWINGS

FIG. 1 is a schematic view (perspective view) of one example of a prepreg according to the present invention, in which (C) a thermoplastic resin layer is provided all over a layer in which (A) reinforcing fibers are impregnated with (B) a thermosetting resin.

FIG. 2 is a cross-sectional schematic view of one example of a prepreg according to the present invention.

FIG. 3 is a schematic view depicting an evaluation method for drapability.

FIG. 4 is schematic graphs of a loss angle $\delta$ curve prepared using, as a measuring object, a region in which (A) reinforcing fibers are impregnated with (B) a thermosetting resin.

FIG. 5 is a schematic diagram illustrating the procedure for making a sample used in the section of Examples to evaluate the joint strength.

DESCRIPTION OF EMBODIMENTS

The present invention is a prepreg including (A) reinforcing fibers, (B) a thermosetting resin, and (C) a thermoplastic resin, wherein the (A) reinforcing fibers are impregnated with the (B) thermosetting resin, wherein the (C) thermoplastic resin exists in at least a part of a face of the prepreg, and wherein the (B) thermosetting resin has a peak at 30°C or more and 100°C or less on a loss tangent (tan $\delta$) curve obtained by dynamic mechanical analysis (DMA).

Below, the present invention will be described in detail with reference to specific examples.

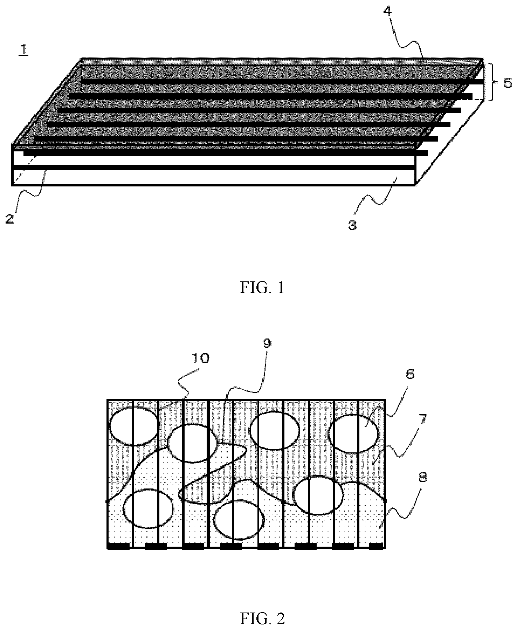

FIG. 1 depicts one example of a prepreg according to the present invention. In the prepreg depicted in FIG. 1, the (A) reinforcing fibers are impregnated with the (B) thermosetting resin, and in addition, a layer of the (C) thermoplastic resin is provided in one face of the prepreg in sheet form. The (C) thermoplastic resin has thermal weldability, and hence, such a face containing the (C) thermoplastic resin can be welded and joined, in good condition and in a short time, to another member, in particular, a member the face of which contains a thermoplastic resin. Here, the existence of the (C) thermoplastic resin is not limited to any particular form, and the whole surface of the prepreg in sheet form may be covered, or a part of the face may be covered, with the (C) thermoplastic resin. Alternatively, the (C) thermoplastic resin may exist in an aspect in which a plurality of regions are provided in the form of islands. From the viewpoint of ensuring stable thermal weldability, the ratio of the (C) thermoplastic resin in the face is preferably 50% or more, more preferably 80% or more, with respect to 100% of the area of that face of the prepreg in which the (C) thermoplastic resin is provided. In this regard, in the depiction of FIG. 1, the (A) reinforcing fibers are depicted with solid lines to help understand the invention, but the (A) reinforcing fibers are actually in the prepreg. The sides that are actually invisible from a perspective viewpoint are also depicted with solid lines.

Additionally, in the prepreg depicted in FIG. 1, the (C) thermoplastic resin does not exist in the face opposite from the face in which the (C) thermoplastic resin exists. That is, the former face is formed with the layer in which the (A) reinforcing fibers are impregnated with (B) thermosetting resin. Such an aspect makes it possible to exhibit suitable adhesiveness at a mold temperature (60 to 160°C) common for injection molding and press molding, and to inhibit the prepreg from causing a positional shift in a mold.

The (B) thermosetting resin as a constituent of a prepreg according to the present invention has a peak at 30°C or more and 100°C or less on a loss tangent (tan $\delta$) curve obtained by dynamic mechanical analysis (DMA). In the present invention, the loss tangent (tan $\delta$) curve obtained from the (B) thermosetting resin by dynamic mechanical analysis (DMA) is determined in accordance with the following method. That is,

> i) in cases where a thermoplastic resin exists in a face of the prepreg, the portion of the thermoplastic resin is removed to prepare one sample piece composed only of a thermosetting resin and reinforcing fibers. The amount of the sample is approximately 1 g.
>
> ii) A dynamic mechanical analyzer (ARES Rheometer: manufactured by TA Instruments, Inc.) is used to determine the peak temperature on a tan $\delta$ curve obtained by an isokinetic heating measurement in accordance with JIS C6481. The peak temperature is on a curve drawn with temperature as the abscissa and the tan $\delta$ determined as the ratio (G"/G') of the loss modulus G" of the prepreg to the storage modulus G' of the same as the ordinate.

The measurement conditions are as follows.

> Heating rate: 5°C/minute
> Frequency: 1 Hz

Bringing, to 30°C or more, the peak temperature on a tan $\delta$ curve obtained from the relationship between the temperature and the tan $\delta$ inhibits the adhesiveness of the thermosetting resin to make the handleability good, and makes it easy to dispose the prepreg in a mold in injection molding or press molding. On the other hand, bringing the peak temperature to less than 30°C allows the adhesiveness to be exhibited in a room-temperature environment (23°C), thus making the handleability poor, and making it difficult to dispose the prepreg in a mold in injection molding in press molding. Bringing the peak temperature to 100°C or less on the tan $\delta$ curve makes it possible to exhibit suitable flexibility and adhesiveness at a mold temperature (60 to 160°C) common for injection molding and press molding, to easily form the prepreg on a complicated mold face, and to inhibit the prepreg from causing a positional shift in a mold. On the other hand, bringing the peak temperature to more than 100°C does not allow suitable flexibility and adhesiveness to be exhibited at a face temperature (60 to 160°C) common for a mold, makes it difficult to form the prepreg on a mold face having a complicated shape, and causes the prepreg disposed in a mold to undergo a positional shift. That is, cases where the peak temperature on the tan $\delta$ curve of the thermosetting resin is out of the range of 30°C or more and 100°C or less makes it possible neither to use the prepreg to efficiently reinforce and stiffen a member containing a thermoplastic resin, nor to obtain an integrally molded article having excellent appearance characteristics. The range of the peak temperature on the

tan $\delta$ curve of the thermosetting resin is preferably 40°C or more and 90°C or less, still more preferably 50°C or more and 80°C or less.

In this regard, it is known that the peak temperature on a tan $\delta$ curve of a thermosetting resin depends on the degree of cure of the thermosetting resin. In a method that can be taken for example, the degree of cure of the (B) thermosetting resin in a prepreg according to the present invention is controlled so that the peak temperature on a tan $\delta$ curve can be within the above-mentioned ranges, for example, the degree of cure is adjusted by adjusting the curing temperature and time for the thermosetting resin so that the peak temperature on a tan $\delta$ curve can be within the above-mentioned ranges.

Additionally, as depicted in FIG. 2, a prepreg according to the present invention preferably contains the (A) reinforcing fibers existing in the boundary face between and in both of a resin region containing the (B) thermosetting resin and a resin region containing the (C) thermoplastic resin. Here, "the (A) reinforcing fibers existing in the boundary face between and in both of a resin region containing the (B) thermosetting resin and a resin region containing the (C) thermoplastic resin" refers to the (A) reinforcing fibers in a state where both the (B) thermosetting resin and the (C) thermoplastic resin are in contact with the whole circumference of a fiber in a portion of a cross-section of the fibers, and/or in a state where the whole circumference of a fiber in a portion of a cross-section of the fibers is in contact with the (B) thermosetting resin, and where the whole circumference of a fiber in another portion of the cross-section of the fibers is in contact with the (C) thermoplastic resin. Such a prepreg makes it possible to obtain a high joint strength. That is, the state where the (A) reinforcing fibers exist in both the resin region containing the (B) thermosetting resin and the resin region containing the (C) thermoplastic resin allows both the resin regions to be bonded to each other via the (A) reinforcing fibers, thus enhancing the joining force between the resin region containing the (B) thermosetting resin and the resin region containing the (C) thermoplastic resin.

Examples of methods of forming the state where the (A) reinforcing fibers exist in the boundary face between and in both of the resin region containing the (B) thermosetting resin and the resin region containing the (C) thermoplastic resin include: a method in which one face of the (A) reinforcing fibers is coated with the (C) thermoplastic resin that is melted, and then, the opposite face is impregnated with the (B) thermosetting resin; and a method in which the (A) reinforcing fibers are impregnated with the (B) thermosetting resin, the (C) thermoplastic resin in the form of a sheet, nonwoven fabric, or particles is then adhered to a face of the resulting fibers, the resulting product is then molded under heating and pressing at a temperature 30°C or more higher than the melting point of the (C) thermoplastic resin in cases where the (C) thermoplastic resin is crystalline, or at a temperature 30°C or more higher than the glass transition temperature of the (B) thermosetting resin in cases where the (C) thermoplastic resin is amorphous, whereby the (B) thermosetting resin and the (C) thermoplastic resin are both allowed to flow at the boundary face between both the resins to form the above-mentioned state. In cases where a resin having excellent moist heat resistance is used as the (C) thermoplastic resin, such one face is preliminarily coated with the (C) thermoplastic resin in a preferable method, since a thermoplastic resin has a higher melting point.

A prepreg according to the present invention preferably has a drapability of 3° or more, as defined below. This affords formability good for the disposition in a mold having a complicated shape having a curved face or a corner in injection molding and press molding. The drapability is more preferably 10° or more. The upper limit is not limited to any particular value, and is preferably 90° or less because there are some cases where the handleability is poor even if the degree of curvature is large.

Below, the drapability in the present invention will be described.

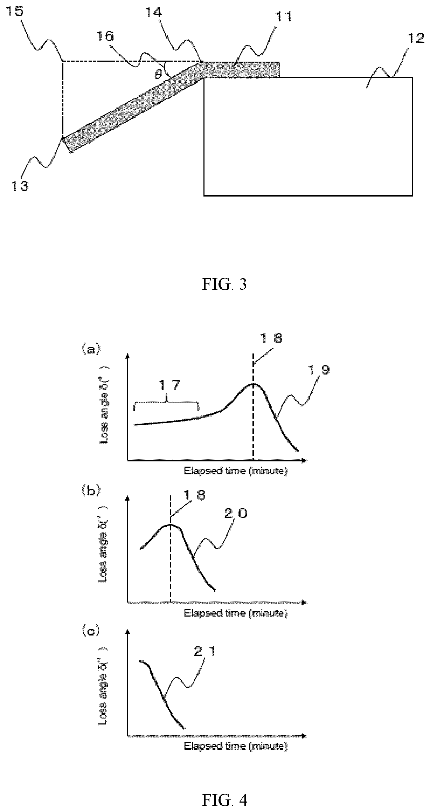

Drapability is one index that represents the flexibility of a prepreg, that is, how easily a prepreg is formed in a mold. In a measurement method, an evaluation sample is cut out so as to have a width of 25 mm and a length of 300 mm. In a room-temperature environment (23°C), a portion 100 mm from one end of the sample is fixed on the upper face of a horizontal test bench with an adhesive tape, and further fixed with cellophane tape on the portion, as shown FIG. 3. The remaining 200-mm portion is set so as to protrude from the test bench into the air, the sample is held so as to be horizontal, and then, the hold is released so that the remaining portion can hang down. Five minutes after the sample is released from the hold, an evaluation is made on the basis of a draping angle between the edge of the sample bent by its own weight and the horizontal face of the test bench. Here, assuming that the lowest point at the edge of the sample bent by its own weight is a point a, that the starting point of the protrusion into the air is a point b, and that the intersection between a line drawn from the point a in the vertical direction and a line drawn from the point b in the horizontal direction is a point c, as depicted in FIG. 3, the draping angle 16 ($\theta$°) is represented by the below-mentioned formula. In this manner, five measurements are made, and the arithmetic average is regarded as a value of drapability. Here, in FIG. 3, the sample is bent only at the point b, but in reality, the sample usually makes an arc.

$$\text{Draping angle } \theta(°) = \{\tan^{-1}(\text{lac} / \text{lbc})\} \cdot (180 / \pi)$$

Here, lac is a distance between the point a and the point c, and lbc is a distance between the point b and the point c.

In this regard, there are some cases where another constituent such as a release film is added to a face of a prepreg, but, needless to say, what is evaluated is the prepreg.

For a prepreg according to the present invention, it is preferable that, on a loss angle δ curve obtained by analyzing, by the dynamic mechanical analysis (DMA) defined below, the region in which the (A) reinforcing fibers are impregnated with the (B) thermosetting resin, the loss angle δ curve has a point representing the maximum value, and has a point which represents a loss angle δ value 5° or more smaller than the maximum value, and which is on the earlier time side of the point representing the maximum value; that is, the curve has a peak having a height of 5° or more, as viewed from the earlier time side. In the present invention, the loss angle δ curve is determined in accordance with the following method. That is,

i) a thermoplastic resin is removed from a face of a prepreg to prepare one sample piece composed only of a thermosetting resin and reinforcing fibers. Furthermore, the sample pieces are laminated so as to have a thickness of approximately 0.5 to 3 mm, typically a thickness of approximately of 1 mm, to obtain a sample. Here, in cases where the sample pieces are unidirectional materials, the pieces are symmetrically laminated.

ii) A dynamic mechanical analyzer (ARES Rheometer: manufactured by TA Instruments, Inc.) is used to make a measurement under isothermal conditions in accordance with JIS K7244-10. A curve is drawn with elapsed time as the abscissa and the loss angle $\delta(°) = \tan^{-1}(G''/G')$ determined with the storage modulus G' of the prepreg and the loss modulus G" of the same as the ordinate.

The measurement conditions are as below-mentioned. In this regard, the measurement temperatures are the following three measurement temperatures at which a measurement is made. Any one of the resulting loss angle δ curves needs only to satisfy the above-mentioned or below-mentioned preferable conditions for the loss angle δ curve. Here, a mold temperature to be selected for use in molding is a temperature at which these conditions are satisfied, or a temperature near the temperature. In this connection, the thermosetting resins used in Examples can be integrally molded at a mold temperature of 80°C for injection molding, and hence, the results determined at a measurement temperature of 80°C are described. In addition, the mold temperature is preferably lower from an energy efficiency viewpoint, and hence, the prepreg preferably gives the above-mentioned or below-mentioned preferable loss angle δ curve at a measurement temperature of 80°C.

Heating rate: 5°C/minute
Starting point: 30°C
Measurement temperature: 80°C, 110°C, or 140°C
Frequency: 10 Hz

Having one peak up to which the height viewed from the earlier time side on a loss angle δ curve, that is, the amount of variation of the positive loss angle is 5° or more allows suitable flexibility and adhesiveness to be exhibited at a surface temperature common for a mold (60 to 160°C), and thus, makes it easy to perform forming on a curved mold face having a small curvature radius. Additionally, in molding performed using a horizontal injection machine, the prepreg can be easily adhered to a mold face standing vertically, and thus, enables integrated molding without causing a positional shift due to the influence of the vibration during mold closing or the pressure during resin filling. The shape of a loss angle δ curve having a peak can be the shape (shape 1) illustrated in FIG. 4 (a) in which the maximum point appears after the region 17 in the form of a gentle slope having no ups or downs, or the shape (shape 2) illustrated in FIG. 4 (b) in which the maximum point appears after the curve having a positive slope. Among these, the shape 2, in which the peak appears in a shorter time, is more preferable. Thus, the prepreg in a room-temperature environment (23°C) has no adhesiveness on a face thereof, and thus, has further excellent handleability.

For a prepreg according to the present invention, it is also preferable that the region in which the (A) reinforcing fibers are impregnated with the (B) thermosetting resin does not have a peak having a height of 5° or more as viewed from the earlier time side on the above-mentioned loss angle δ curve obtained by dynamic mechanical analysis (DMA), as illustrated in FIG. 4 (c) that has no peak. Because of this, the prepreg has excellent handleability in a room-temperature environment (23°C), exhibits flexibility and adhesiveness at a surface temperature (60 to 160°C) common for a mold, and thus, can be formed on a flat plate or a curved mold face having a large curvature radius. In particular, the prepreg has excellent shape retention capability, and thus, can withstand even high pressure during large-area high-pressure molding.

That is, the prepreg having no peak having a height of 5° or more as viewed from the earlier time side on a loss angle δ curve is suitably used for a curved mold face having a small curvature radius. The prepreg having no peak is suitably used for a flat plate or a curved mold face having a large curvature radius.

For a prepreg according to the present invention, it is preferable that the whole prepreg has an average thickness

of 50 μm or more and 400 μm or less, and that, assuming that the average thickness is 100%, the resin region containing the (C) thermoplastic resin has an average thickness of 2% or more and 55% or less. Bringing, within the above-mentioned ranges, the ratio of the average thickness of the resin region containing the (C) thermoplastic resin to the average thickness of the whole prepreg affords good drapability and makes it easy to form the prepreg in a mold. This ratio is more preferably 5% or more and 30% or less. Bringing the ratio within this range makes it possible to obtain a prepreg further having excellent prepreg windability and reelability in addition to formability. In this regard, the average thickness of the whole prepreg and the average thickness of the resin region containing the (C) thermoplastic resin can be measured as below-mentioned by observing a cross-section of a prepreg under an optical microscope.

That is, a sample having a length of 20 mm and a width of 25 mm is taken from a prepreg, and the thickness of each portion is measured as below-mentioned. A cross-section of the above-mentioned sample is magnified 200 times under a laser microscope (VK-9510, manufactured by Keyence Corporation). Ten portions are randomly selected in such a manner that the fields of view thereof do not overlap one another, and the portions are photographed (for example, observed as depicted in FIG. 2). In each of the images photographed, ten measurement points are selected at regular intervals, and the thickness of the whole prepreg and the thickness of the thermoplastic resin are measured. On the basis of the average value of the measurement data of the total of 100 points, the average thickness of the whole of a typical prepreg is determined as T, and the average thickness of the resin region containing the thermoplastic resin is determined as Tp. Here, the difference is the average thickness Ts of the thermosetting resin.

For a prepreg according to the present invention, it is preferable to use, as the (A) reinforcing fibers, reinforcing fibers having a surface free energy of 10 to 50 mJ/m$^2$, as measured by the Wilhelmy method. Thus, the (A) reinforcing fibers exhibit high affinity with the (B) thermosetting resin and the (C) thermoplastic resin, and exhibit high joint strength at the joint face between the (B) thermosetting resin and the (C) thermoplastic resin, wherein the (A) reinforcing fibers exist in the joint face between and in both of the (B) thermosetting resin and the (C) thermoplastic resin. The surface free energy is preferably 10 to 40 mJ/m$^2$, more preferably, 20 to 40 mJ/m$^2$. The surface free energy of less than 10 mJ/m$^2$ results in low affinity between the (A) reinforcing fibers and the (B) thermosetting resin or the (C) thermoplastic resin, being disadvantageous from the viewpoint of joint strength. In addition, the surface free energy of more than 50 mJ/m$^2$ causes the (A) reinforcing fibers to aggregate, be poorly dispersed in the molded article, and cause a large variation in joint strength.

Examples of methods of controlling the surface free energy of a face of the (A) reinforcing fibers include: a method in which the face is oxidized, and control is performed through adjusting the amount of the oxygen-containing functional group such as a carboxyl group or a hydroxyl group; and a method in which control is performed with a single kind or a plurality of kinds of compounds adhered to the face. In cases where a plurality of compounds are adhered to the face, a mixture of compounds having high surface free energy and compounds having low surface free energy may be adhered. Next, a method of calculating the surface free energy of the reinforcing fibers will be described.

The above-mentioned surface free energy can be determined by measuring the contact angle between the (A) reinforcing fibers and each of three kinds of solvents (purified water, ethylene glycol, and tricresyl phosphate), and then using Owens' approximation. Below, the procedure will be described.

< Measurement of contact angle>

i) Using a contact angle measuring instrument (DCAT11: manufactured by DataPhysics Instruments GmbH), one single fiber is first taken out of a bundle of the (A) reinforcing fibers, and cut into eight pieces having a length of 12±2 mm, and then, the pieces are attached to a special holder FH12 (a flat plate having a face coated with an adhesive material) so as to be in parallel to one another at 2- to 3-mm intervals between the single fiber pieces.

ii) The edges of the single fibers are cut straight, and set in the contact angle measuring instrument on the holder. In the measurement, each cell containing each of the solvents is pulled up closer to the lower edges of the eight single fibers at a speed of 0.2 mm/s, and immersed by 5 mm from the edges of the single fibers. Then, the single fibers are pulled up at a speed of 0.2 mm/s. This operation is repeated four or more times.

iii) A force F applied to the single fibers immersed in the liquid is measured using an electronic balance, and this value is used to calculate the contact angle θ in accordance with the following formula.

COSθ = (force F (mN) applied to eight single fibers) / ((8 (number of single fibers) × circumference (m) of single fiber × surface tension (mJ/m$^2$) of solvent)

In this regard, a measurement is made using the single fibers withdrawn from three different positions of the reinforcing fiber bundle, that is, a total of 24 single fibers from one reinforcing fiber bundle are used to determine the average contact angle value.

<Calculation of surface free energy>

The surface free energy $\gamma_f$ of the reinforcing fibers is calculated as the sum of the polar component $\gamma^p_f$ of the surface free energy and the non-polar component $\gamma^d_f$ of the surface free energy. The polar component of the surface free energy is determined by substituting the components of the surface tension of each liquid and the contact angle in Owens' approximation formula represented by the following formula (a formula constituted by the polar component and non-polar component of the surface tension inherent to each solvent, and in addition, the contact angle θ), plotting the result on an X and Y chart, and then squaring the slope a obtained by straight-line approximation based on the least square method.

$$Y = a \cdot X + b$$

X = V(polar component ($mJ/m^2$) of surface tension of solvent) / V(non-polar component ($mJ/m^2$) of surface tension of solvent) Y = (1+COSθ)·(polar component ($mJ/m^2$) of surface tension of solvent) / (2 × √(non-polar component ($mJ/m^2$) of surface tension of solvent)

$$\gamma^p_f = a^2$$

$$\gamma^d_f = b^2$$

$$\gamma_f = \gamma^p_f + \gamma^d_f = a^2 + b^2$$

The polar component and non-polar component of the surface tension of each solvent is as below-mentioned.

- Purified water

Surface tension, 72.8 $mJ/m^2$; polar component, 51.0 $mJ/m^2$; non-polar component, 21.8 ($mJ/m^2$)

- Ethylene glycol

Surface tension, 48.0 $mJ/m^2$; polar component, 19.0 $mJ/m^2$; non-polar component, 29.0 ($mJ/m^2$)

- tricresol phosphate

Surface tension, 40.9 $mJ/m^2$; polar component, 1.7 $mJ/m^2$; non-polar component, 39.2 ($mJ/m^2$).
For a prepreg according to the present invention, it is preferable that the (A) reinforcing fibers are arranged unidirectionally. Arranging the (A) reinforcing fibers unidirectionally makes it possible to efficiently reinforce and stiffen the portions containing the thermoplastic resins.
A prepreg according to the present invention preferably has a tensile strength of 0.3 MPa or more in the direction that is perpendicular to the direction in which said (A) reinforcing fibers are arranged, and is parallel to a face of the sheet (a perpendicular-to-fiber tensile strength). Bringing the tensile strength within this range makes it possible to inhibit the fibers from being disordered by injection pressure or pressing pressure in cases where injection molding or press molding is adopted as a method of laminating or joining thermoplastic resin members in a subsequent step. The tensile strength is more preferably 1.2 MPa or more. Bringing the tensile strength with this range makes it possible to withstand injection pressure during injection molding that involves particularly causing the resins to flow and generating high pressure. In this regard, the upper limit is subject to no particular limitation, preferably higher, and preferably approximately 1.5 MPa.
Here, the perpendicular-to-fiber tensile strength is measured by the below-mentioned method.

(A) A prepreg in which reinforcing fibers are arranged unidirectionally is cut to a width of 50 mm and a length of 150 mm so that the direction perpendicular to the fibers can be the longitudinal direction. The cut piece is used as an evaluation sample. The evaluation sample is set in a table model universal testing system (AUTOGRAPH AGS, manufactured by Shimadzu Corporation) in such a manner that the distance between the clip grips is 100 mm, and a tensile test is performed at a speed of 100 mm/minute in a room-temperature environment (23°C). Assuming that the maximum load at which the sample is not broken is Pmax, and that the horizontal cross-sectional area perpendicular to the longitudinal direction of the sample is A, the perpendicular-to-fiber tensile strength (MPa) can be determined by calculation in accordance with the below-mentioned formula. Here, the number of evaluation samples is 5 or more, and the arithmetic average of the values calculated is adopted. In this regard, the tensile strength is a value determined as a yield stress when a tensile test is performed.

$$\text{Perpendicular-to-fiber tensile strength (MPa)} = \text{Pmax} / \text{A}$$

A molded article according to the present invention is a molded article obtained by heat-curing the above-mentioned prepreg in a mold. A molded article that is heat-cured in a mold so as to have a shape equal to the shape of a portion desired to be reinforced and stiffened in an existing part achieves an excellent reinforcing and stiffening effect without peeling off a face of the existing part. In particular, the molded article can be reinforced and stiffened efficiently for a large part that is difficult to reinsert into a mold. In this regard, the peak temperature of the resulting molded article on a $\tan \delta$ curve is 100°C or more.

An integrally molded article according to the present invention is a molded article formed by injection-molding or press-molding a thermoplastic resin integrally with the above-mentioned prepreg. Using the prepreg makes it possible to efficiently reinforce and stiffen an intended portion of a thermoplastic resin member.

Next, each of the (A) reinforcing fibers, the (B) thermosetting resin, and the (C) thermoplastic resin that can be used suitably in the present invention will be described.

<(A) Reinforcing fibers>

Examples of the (A) reinforcing fibers include carbon fibers, glass fibers, metal fibers, aromatic polyamide fibers, polyaramide fibers, alumina fibers, silicon carbide fibers, boron fibers, basalt fibers, and the like. These may be used singly or in combination of two or more kinds thereof. These reinforcing fibers may be surface-treated. Examples of surface treatments include metallic cladding treatment, coupling agent treatment, sizing agent treatment, additive agent adhesion treatment, and the like. Some of these reinforcing fibers are reinforcing fibers having electrical conductivity. Carbon fibers have a small specific gravity, high strength, and high elastic modulus, and thus, are preferably used as reinforcing fibers.

In FIG. 1, the (A) reinforcing fibers are arranged unidirectionally, but the (A) reinforcing fibers are limited to no particular form as long as the form makes it possible to afford a reinforcing effect. The fibers may be continuous fibers such as long fibers (a fiber bundle) in which reinforcing fibers are arranged unidirectionally, woven fabrics, or the like, or may be discontinuous fibers such as mat weaves or nonwoven fabrics.

Furthermore, the (A) reinforcing fibers may be constituted by a plurality of fibers in the same form, or may be constituted by a plurality of fibers in different forms. The number of single reinforcing fibers constituting one reinforcing fiber bundle is usually 300 to 60,000, preferably 300 to 48,000, more preferably 1,000 to 24,000, considering the production of a base material. The range may be a combination of any one of the upper limits and any one of the lower limits.

Examples of commercially available products of carbon fibers include "TORAYCA (registered trademark)" T800G-24K, "TORAYCA (registered trademark)" T800S-24K, "TORAYCA (registered trademark)" T700G-24K, "TORAYCA (registered trademark)" T700S-24K, "TORAYCA (registered trademark)" T300-3K, and "TORAYCA (registered trademark)" T1100G-24K (which are all manufactured by Toray Industries, Inc.).

<(B) Thermosetting resin>

Examples of the (B) thermosetting resins include unsaturated polyester resins, vinyl ester resins, epoxy resins, phenol resins, urea resins, melamine resins, polyimide resins, cyanate ester resins, bismaleimide resins, benzoxazine resins, copolymers thereof, modified products thereof, and resins obtained by blending at least two thereof. An elastomer or rubber component may be add to the thermosetting resin in order to enhance the impact resistance. Among these, epoxy resins excel in mechanical characteristics, heat resistance, and adhesion to reinforcing fibers, and hence, are preferable. Examples of base compounds of epoxy resins include: bisphenol epoxy resins such as bisphenol A epoxy resins, bisphenol F epoxy resins, bisphenol AD epoxy resins, and bisphenol S epoxy resins; brominated epoxy resins such as tetrabromobisphenol A diglycidyl ether; epoxy resins having a biphenyl skeleton; epoxy resins having a naphthalene skeleton; epoxy resins having a dicyclopentadiene skeleton; novolac epoxy resins such as phenol novolac epoxy resins and cresol novolac epoxy resins; glycidyl amine epoxy resins such as *N,N*,O-triglycidyl-m-aminophenol, *N,N*,O-triglycidyl-p-aminophenol, *N,N*,O-triglycidyl-4-amino-3-methylphenol, *N,N,N',N'*-tetraglycidyl-4,4'-methylene dianiline, *N,N,N',N'*-tetraglycidyl-2,2'-diethyl-4,4'-methylene dianiline, *N,N,N',N'*-tetraglycidyl-m-xylylene diamine, *N,N*-diglycidyl aniline, and N,N-diglycidyl-o-toluidine; resorcin diglycidyl ether; triglycidyl isocyanurate; and the like.

Examples of curing agents for epoxy resins include dicyan diamide, aromatic urea compounds, aromatic amine compounds, phenol novolac resins, cresol novolac resins, polyphenol compounds, imidazole derivatives, tetramethyl guanidine, thiourea-added amine, carboxylic acid hydrazide, carboxylic acid amide, polymercaptan, and the like.

<(C) Thermoplastic resin>

The (C) thermoplastic resin is subject to no particular limitation as long as the resin can be melted by heating. Examples thereof include: polyester-based resins such as polyethylene terephthalate, polybutylene terephthalate, polytrimethylene terephthalate, polyethylene naphthalate, and liquid crystal polyesters; polyolefins such as polyethylene, polypropylene, and polybutylene; styrene resins; urethane resins; polyoxymethylene; polyamides such as polyamide 6 and polyamide 66; polycarbonate; polymethyl methacrylate; polyvinyl chloride; polyphenylene sulfide; polyphenylene ether; modified polyphenylene ether; polyimide, polyamideimide; polyether imide; polysulfone; modified polysulfone; polyether sulfone; polyarylene ether ketones such as polyketone, polyether ketone, polyether ether ketone, and polyether ketone ketone; polyalylate; polyether nitrile; phenol resins; phenoxy resins; and the like. In addition, these thermoplastic resins may be copolymers or modified products of the above-mentioned resins, and, in addition, may each be a blend of two or more selected from the above-mentioned resins and copolymers or modified products thereof. Among others, one or more selected from polyarylene ether ketone, polyphenylene sulfide, and polyether imide are preferably contained in an amount of 60 weight% or more in the (C) thermoplastic resin as a resin or a resin composition from the viewpoint of heat resistance. An elastomer or rubber component may be added in order to enhance the impact resistance. Furthermore, another filler or additive agent may be suitably added depending on the application or the like to the extent that such addition does not impair an object of the present invention. Examples include inorganic fillers, flame retardants, electroconductivity-imparting agents, nucleating agents, ultraviolet absorbers, antioxidants, vibration damping agents, antimicrobial agents, insect repellents, deodorizers, color protection agents, heat stabilizers, release agents, antistatic agents, plasticizers, lubricants, colorants, pigments, dyes, foaming agents, antifoaming agents, coupling agents, and the like.

In addition, various application forms can be adopted to apply the (C) thermoplastic resin to a sheet-like material in which the (A) reinforcing fibers are preliminarily impregnated with the (B) thermosetting resin. Examples of such methods include: a method in which the (C) thermoplastic resins formed in sheet form or nonwoven fabric form are laminated; a method in which the (C) thermoplastic resin in particulate form is sprayed onto a sheet-like material, and the resulting product is heated to become integrated; and the like.

<Applications>

An integrally molded article according to the present invention can be obtained by disposing the prepreg in a mold for injection molding or press molding, and performing insert molding to integrate the prepreg with a member containing a thermoplastic resin. An integrally molded article according to the present invention is favorably used for the following: structure members for aircrafts; windmill vanes; outer panels and seats for automobiles; computer applications such as IC trays and housings for notebook personal computers; sports applications such as golf club shafts and tennis rackets; and the like.

EXAMPLES

Below, the present invention will be described in further detail with reference to Examples. However, the scope of the present invention is not construed to be limited to these Examples.

(1) Materials used

(A) Reinforcing fibers

- A-1: carbon fibers ("TORAYCA (registered trademark)" T700S-24K, manufactured by Toray Industries, Inc.; the strand tensile strength, 4.9 GPa).
- ·A-2: woven fabric made of plain-woven carbon fibers (the areal weight, 193 g/m$^2$)
  Below, reinforcing fibers to a face of which each of the various compounds listed in the below-mentioned A-3 to A-8 is added will be described. These fibers were obtained by obtaining a common carbon fiber bundle as a raw material by the below-mentioned method, and then coating the carbon fibers with each of the various compounds listed in the below-mentioned A-3 to A-8. That is, an acrylonitrile copolymer obtained by copolymerizing itaconic acid was first spun, and fired to obtain a carbon fiber bundle having a total of 24,000 filaments, a specific gravity of 1.8 g/cm$^3$, a strand tensile strength of 4.9 GPa, and a strand tensile modulus of 230 GPa. Then, each kind of compound was mixed with acetone to obtain a solution of an approximately 1 mass% compound uniformly dissolved. Each compound was applied to the carbon fiber bundle by an immersion method. The resulting product was then heat-treated at 210°C for 90 seconds, and adjusted so that the amount of each compound adhered could be 0.5 part by mass with respect to 100 parts by mass of the carbon fibers to which each compound was adhered.

- A-3: carbon fibers to which polyethylene glycol diglycidyl ether (the number of ethylene oxide, 13; manufactured by Nagase ChemteX Corporation) was added.
  Surface free energy: 20 mJ/m$^2$
- A-4: carbon fibers to which bisphenol A-propylene oxide 24-mol adduct was added
  Surface free energy: 18 mJ/m$^2$
- A-5: carbon fibers to which sorbitol polyglycidyl ether (EX614B, manufactured by Nagase ChemteX Corporation) was added
  Surface free energy: 32 mJ/m$^2$
- A-6: carbon fibers to which polyallylamine (PAA-01, manufactured by Nippon Shokubai Co., Ltd.) was added
  Surface free energy: 32 mJ/m$^2$
- A-7: carbon fibers to which polyethylene imine (SP-012, manufactured by Nippon Shokubai Co., Ltd.) was added
  Surface free energy of 33 mJ/m$^2$
- A-8: carbon fibers to which bisphenol A diglycidyl ether (jER828, manufactured by Mitsubishi Chemical Corporation) was added
  Surface free energy: 9 mJ/m$^2$
- A-9: woven fabric made of A-5 that was plain-woven

Surface free energy: 32 mJ/m$^2$

(B) Thermosetting resin

The thermosetting resin was prepared using the following materials.

- Base compound of epoxy resin:
  "jER (registered trademark)" 828, 1001, and 154 (which are all manufactured by Mitsubishi Chemical Corporation)
- Curing agent for epoxy resin:
  DICY7 (dicyan diamide, manufactured by Mitsubishi Chemical Corporation), "Omicure (registered trademark)" 24 (manufactured by PTI Japan, Ltd.), and 3,3'DAS (3,3'-diaminodiphenyl sulfone, manufactured by Mitsui Fine Chemicals, Inc.)

The above-mentioned materials were used to produce the thermosetting resins B-1 and B-2 according to the following method.

- B-1: Into a stainless steel beaker, jER828, jER1001, and jER154 were introduced in an amount of 300 g, 400 g, and 300 g respectively. The resulting mixture was heated to 150°C, and kneaded until the components were dissolved into one another. The resulting mixture was cooled to 60°C, and then, 54 g of DICY7T and 20 g of Omicure 24 were added to the mixture. The resulting mixture was kneaded at 60°C for 30 minutes to obtain a thermosetting resin B-1.
- B-2: Into a stainless steel beaker, jER828, jER1001, and jER154 were introduced in an amount of 300 g, 400 g, and 300 g respectively. The resulting mixture was heated to 150°C, and kneaded until the components were dissolved into one another. The resulting mixture was cooled to 80°C, and then, 260 g of 3,3'DAS was added to the mixture. The resulting mixture was kneaded at 80°C for 30 minutes to obtain a thermosetting resin B-2.

(C) Thermoplastic resin

- C-1: a film composed of polyamide 6 ("AMILAN" (registered trademark) CM1007 (manufactured by Toray Industries, Inc.; the melting point, 225°C)) and having an areal weight of 10 g/m$^2$ was used.
- C-2: a film composed of polyamide 6 ("AMILAN" (registered trademark) CM1007 (manufactured by Toray Industries, Inc.; the melting point, 225°C)) and having an areal weight of 30 g/m$^2$ was used.
- C-3: a film composed of polyamide 6 ("AMILAN" (registered trademark) CM1007 (manufactured by Toray Industries, Inc.; the melting point, 225°C)) and having an areal weight of 85 g/m² was used.

- C-4: a film composed of acid-modified polypropylene ("ADMER" (registered trademark) QB510 (manufactured by Mitsui Chemicals, Inc.; the melting point, 165°C)) and having an areal weight of 30 g/m² was used.
- C-5: a film composed of polyether ketone ketone ("KEPSTAN" (registered trademark) 7002 (manufactured by Arkema S.A.; the melting point, 331°C)) having an areal weight of 30 g/m² was used.

(D) Materials for injection molding

- D-1: into a twin-screw extruder, 80 parts of polyamide 6 and 20 parts of the above-mentioned T700S were introduced, and the resulting mixture was kneaded under heating at 250°C to obtain pellets for injection molding. The average fiber length of T700S in the pellets was 0.1 mm.
- D-2: into a twin-screw extruder, 80 parts of acid-modified polypropylene and 20 parts of the above-mentioned T700S were introduced, and the resulting mixture was kneaded under heating at 250°C to obtain pellets for injection molding. The average fiber length of T700S in the pellets was 0.1 mm.
- D-3: into a twin-screw extruder, 80 parts of polyether ketone ketone and 20 parts of the above-mentioned T700S were introduced, and the resulting mixture was kneaded under heating at 360°C to obtain pellets for injection molding. The average fiber length of T700S in the pellets was 0.1 mm.

(E) Thermoplastic plate material

- E-1: a randomly-oriented fiber reinforcing thermoplastic resin composed of 80 parts of polyamide 6 and 20 parts of the above-mentioned T700S was used. The plate thickness was 5 mm.
- E-2: a randomly-oriented fiber reinforcing thermoplastic resin composed of 80 parts of acid-modified polypropylene and 20 parts of the above-mentioned T700S was used. The plate thickness was 5 mm.
- E-3: a randomly-oriented fiber reinforcing thermoplastic resin composed of 80 parts of polyether ketone ketone and 20 parts of the above-mentioned T700S was used. The plate thickness was 5 mm.

(2) Method of producing prepreg

Below, the method used for producing a prepreg in the section of Examples will be described.

[Method I]

A reinforcing fiber sheet composed of the (A) reinforcing fibers (described in the section of Examples and Comparative Examples, and the same as in Methods II and III) and having an areal weight of 193 g/m² was withdrawn, and the reinforcing fiber sheet was run, during which a film of the predetermined (C) thermoplastic resin (described in the section of Examples and Comparative Examples, and the same as in Methods II and III) was disposed continuously on the reinforcing fiber sheet. The (C) thermoplastic resin was melted under heating with an IR heater to be adhered to the whole of one face of the reinforcing fiber sheet, the resulting product was pressed using a nip roll held at a temperature equal to or lower than the melting temperature of the (C) thermoplastic resin, and the reinforcing fiber sheet impregnated with the (C) thermoplastic resin was cooled to obtain a fiber-reinforced resin intermediate. Then, a release paper is coated with the predetermined (B) thermosetting resin (described in the section of Examples and Comparative Examples, and the same as in Methods II and III) at a resin areal weight of 100 g/m² using a knife coater to produce a thermosetting resin film. Then, the thermosetting resin film was superposed on the face of the above-mentioned intermediate opposite from the face impregnated with the (C) thermoplastic resin, and the resulting product was pressed under heating using a heat roll to impregnate the fiber-reinforced resin intermediate with the (B) thermosetting resin to obtain a prepreg. During this, the peak temperature of the prepreg on a tan δ curve was adjusted in accordance with the time of contact between the fiber bundle passing through the heat roll and the roll and in accordance with the roll temperature. Here, the time of contact between the fiber bundle and the roll was adjusted in accordance with the number of rolls and the passage speed of the fiber bundle. In this regard, the running direction of the reinforcing fiber sheet during impregnation was the longitudinal direction with respect to the reinforcing fibers of the prepreg in cases where the reinforcing fibers were arranged unidirectionally, and was the longitudinal direction of the reinforcing fiber woven fabric in cases where the prepreg was made of the woven fabric.

[Method II]

A release paper was coated with the (B) thermosetting resin at a resin areal weight of 50 g/m$^2$ using a knife coater to produce a thermosetting resin film. This resin film was superposed on both sides of a reinforcing fiber sheet composed of the (A) reinforcing fibers having an areal weight of 193 g/m$^2$, and the resulting product was pressed under heating using a heat roll, so that the reinforcing fiber sheet was impregnated with the thermosetting resin to obtain a fiber-reinforced resin intermediate. The (C) thermoplastic resin film was disposed on a face of the fiber-reinforced resin intermediate, and the resulting product was pressed under heating to be impregnated with the (C) thermoplastic resin, whereby a prepreg was obtained. The peak temperature of the prepreg on a tan δ curve was adjusted in accordance with the time of contact between the fiber bundle passing through the heat roll and the roll and in accordance with the roll temperature in the same manner as described above.

[Method III]

A release paper was coated with the (B) thermosetting resin at a resin areal weight of 50 g/m$^2$ using a knife coater to produce a thermosetting resin film. This resin film was superposed on both sides of a reinforcing fiber sheet composed of the (A) reinforcing fibers having an areal weight of 193 g/m$^2$, and the resulting product was pressed under heating using a heat roll, so that the reinforcing fiber sheet was impregnated with the thermosetting resin to obtain a prepreg. The peak temperature of the prepreg on a tan δ curve was adjusted in accordance with the time of contact between the fiber bundle passing through the heat roll and the roll and in accordance with the roll temperature in the same manner as described above.

(3) Measurement of tan δ peak temperature by dynamic mechanical analysis (DMA)

From a prepreg, one piece composed only of a region in which the (A) reinforcing fibers were impregnated with the (B) thermosetting resin was taken as a sample in an amount of approximately 1 g, and the sample was subjected to DMA using a dynamic mechanical analyzer (ARES rheometer, manufactured by TA Instruments, Inc.) in accordance with JIS C6481 to determine the peak temperature on a tan δ curve. The temperature corresponding to the peak on the tan δ = G"/G' curve obtained from the ratio between the storage modulus G' and loss modulus G" of each prepreg was evaluated. The measurement was performed at a heating rate of 5°C/minute and at a frequency f of 1 Hz.

(4) Method of verifying existence of fibers in and around boundary

From the prepreg, a sample having a length of 10 mm and a width of 10 mm was taken, and underwent the below-mentioned procedure to verify the existence of the (A) reinforcing fibers in the boundary face between and in both of the resin region of the (B) thermosetting resin and the resin region of the (C) thermoplastic resin. Such a sample was taken from each of the 10 portions selected randomly, and the sample was subjected to ultrasonic cleaning with methyl alcohol for 30 minutes to remove the (C) thermoplastic resin. The resulting sample was observed under a Scanning Electron Microscope (VK-95 10, manufactured by Keyence Corporation). In cases where one or more fibers bared in the whole face of each of the samples taken from the 10 portions were observed, the (A) reinforcing fibers were judged to exist in the boundary face between and in both of the (B) thermosetting resin and the (C) thermoplastic resin.

(5) Drapability

As shown FIG. 3, the prepreg was cut out to a width of 25 mm and a length of 300 mm, and used as an evaluation sample. In this regard, the longitudinal direction of the reinforcing fibers of the prepreg was regarded as the longitudinal direction of the sample in cases where the fibers were arranged unidirectionally, and the longitudinal direction of the reinforcing fiber woven fabric was regarded as the longitudinal direction of the sample in cases where the prepreg was made of the woven fabric. In room environment (23°C), a portion 100 mm from one end of the sample was fixed on the upper face of a horizontal test bench with an adhesive tape, and further fixed with cellophane tape on the portion. The remaining 200-mm portion was protruded into the air, and the sample was held so as to be horizontal. Five minutes after the sample was released from the hold and hung down, an angle at which the edge of the sample was pulled down by its own weight was evaluated as drapability. Here, assuming that the lowest point at the edge of the sample bent by its own weight is a point a, that the starting point of the protrusion into the air is a point b, and that the intersection between a line drawn from the point a in the vertical direction and a line drawn from the point b in the horizontal direction is a point c, the draping angle θ is represented by the below-mentioned formula. In this manner, five measurements are made, and the arithmetic average is regarded as a value of drapability.

$$\text{Draping angle } \theta(°) = \{\tan^{-1}(\text{lac} / \text{lbc})\} \cdot (180 / \pi)$$

Here, lac is a distance between the point a and the point c, and lbc is a distance between the point b and the point c.

(6) Measurement of loss angle δ curve by dynamic mechanical analysis (DMA)

From the prepreg, only a region containing the (A) reinforcing fibers impregnated with the (B) thermosetting resin was taken, and used for measurement. However, in cases where the sample had a thickness of less than 1 mm, the sample was thickened by lamination so as to have a thickness of approximately 1 mm. In the case of a unidirectional material, a laminate formed as per [0°/90°]s (the sign S represents mirror symmetry) was used as a sample, assuming that the fiber direction of the (A) reinforcing fibers was 0°, and that the direction perpendicular to the fibers was 90°. The sample was used for measuring a loss angle δ (= $\tan^{-1}(G''/G')$) by DMA using a dynamic mechanical analyzer (ARES rheometer, manufactured by TA Instruments, Inc.) in accordance with JIS K7244-10. The temperature was raised isokinetically from 30°C to 80°C at a heating rate of 5°C/minute, and then, at 80°C, isothermal measurement was started. The measurement was performed at a frequency of 10 Hz. In this connection, 80°C was adopted as a mold temperature that is commonly used for integrated molding.

(7) Prepreg, region of thermoplastic resin, and thickness of region of thermosetting resin

A sample having a length of 20 mm and a width of 25 mm was taken from a prepreg, and the thickness of each portion was measured as below-mentioned. A cross-section of the above-mentioned sample was magnified 200 times under a laser microscope (VK-9510, manufactured by Keyence Corporation). Ten portions were randomly selected in such a manner that the fields of view thereof did not overlap one another, and the portions were photographed (for example, observed as depicted in FIG. 2). In each of the images photographed, ten measurement points were selected at regular intervals (perpendicular baselines for thickness measurement, 10), and the thickness of the whole prepreg and the thickness of the region of the thermoplastic resin were measured. On the basis of the average value of the measurement data of the total of 100 points, the thickness of a typical prepreg was determined as T, and the thickness of the region of the thermoplastic resin was determined as Tp. The difference therebetween was regarded as the thickness Ts of the region of the thermosetting resin.

(8) Perpendicular-to-fiber tensile strength

A prepreg in which reinforcing fibers were arranged unidirectionally was cut to a width of 50 mm and a length of 150 mm so that the direction perpendicular to the direction in which the reinforcing fibers were oriented could be the longitudinal direction. The cut piece was used as an evaluation sample. The evaluation sample was set in a table model universal testing system (AUTOGRAPH AGS, manufactured by Shimadzu Corporation) in such a manner that the distance between the clip grips was 100 mm, and a tensile test was performed at a speed of 100 mm/minute in a room-temperature environment (23°C). Assuming that the maximum load at which the sample was not broken was Pmax, and that the horizontal cross-sectional area perpendicular to the longitudinal direction of the sample was A, the perpendicular-to-fiber tensile strength (MPa) was calculated in accordance with the below-mentioned formula.

$$\text{Perpendicular-to-fiber tensile strength (MPa)} = \text{Pmax}/A$$

(9) Handleability

The handleability was evaluated in a relative manner according to the below-mentioned four ratings from the viewpoint of stickiness to working gloves with which the prepreg according to the present invention was handled in a room-temperature environment (23°C).

□: when the prepreg was taken up with a hand, the prepreg did not stick to the working glove, and the resin did not adhere to the working glove.
○: when the prepreg was taken up with a hand, the prepreg did not stick to the working glove, but a slight amount of the resin adhered to the working glove.
Δ: when the prepreg was taken up with a hand, the prepreg stuck to the working glove, but the orientation of the (A) reinforcing fibers contained in the prepreg was not disordered.
✕: when the prepreg was taken up with a hand, the prepreg stuck to the working glove, and the orientation of the (A) reinforcing fibers contained in the prepreg was disordered.

(10) Formation of molded article

The prepreg was placed on a mold preheated to 80°C in such a manner that the face of the prepreg, in which the face contained the (C) thermoplastic resin, was in contact with a face of a mold for injection molding. The prepreg was held until the prepreg was completely cured, to obtain a molded article in conformance to the shape of the mold.

(11) Formation of integrally molded article

Below, a method for each of injection molding and press molding will be described.

[Integration by injection molding]

The prepreg was inserted in a mold preheated to 80°C in such a manner that the face of the prepreg, in which the face contained the (C) thermoplastic resin, was in contact with a face of a mold for injection molding. The mold was filled with the (D) injection molding material by injection to obtain an integrally molded article reinforced and stiffened with the prepreg. Here, the (D) injection molding material was melted in a heating cylinder by heating to a temperature 30°C higher than the melting point of the injection molding material, and injection-molded at a screw speed of 60 rpm, at an injection speed of 90 mm/second, at an injection pressure of 200 MPa, and at a back pressure of 0.5 MPa.
An injection molding mold used for integrated molding had a plane having a length of 300 mm and a width of 300 mm and a curved face having an arc length of 302 mm as in a column having a radius of 225 mm and a height of 280 mm.

[Integration by press molding]

The face of the prepreg, in which the face contained the (C) thermoplastic resin, was superposed on the (E) thermoplastic plate material, and then, the resulting product was disposed in such a manner that the face of the prepreg, in which the face did not contain the (C) thermoplastic resin, was in contact with a face of a flat plate mold preheated to 80°C. The resulting product was pressed using a press machine, heated to a temperature 30°C higher than the melting point of the (E) thermoplastic plate material, and then held for 1 minute to obtain an integrally molded article. Here, an evaluation was performed under two conditions of pressure applied by the press machine, as follows: a low pressure (0.5 MPa) and a high pressure (5.0 MPa).

(12) Adhesion to mold

The adhesion to the injection molding mold in which the prepreg was disposed during the above-mentioned formation of an integrally molded article was evaluated in a relative manner according to the below-mentioned four ratings.

□: the prepreg adhered to a mold in less than 3 seconds after being pressed against the mold, and caused no positional shift on the mold.
∘: the prepreg adhered to a mold in 3 seconds or more and less than 10 seconds after being pressed against the mold, and caused no positional shift on the mold in any of 5 cases of molding.
Δ: the prepreg adhered to a mold in 3 seconds or more and less than 10 seconds after being pressed against the mold, but the adhesion was unstable, and caused no positional shift on the mold in the range of from 2 cases to 4 cases out of 5 cases of molding.
×: the prepreg did not become adhesive to a mold within 10 seconds or more after being pressed against the mold, and caused no positional shift on the mold in the range of from 0 case to 1 case out of 5 cases of molding.

(13) Formability on curved mold face

The formability on a curved mold face of an injection molding mold in which the prepreg was disposed during the above-mentioned formation of an integrally molded article was evaluated in a relative manner according to the below-mentioned four ratings.

□: the prepreg exhibited flexibility in less than 3 seconds after being pressed against a mold, and the prepreg was capable of being formed in conformance to the curved mold face.
∘: the prepreg exhibited flexibility in 3 seconds or more and less than 10 seconds after being pressed against the mold, and in any of 5 cases of molding, the prepreg was capable of being formed in conformance to the curved mold face.

Δ: the prepreg exhibited flexibility in 3 seconds or more and less than 10 seconds after being pressed against the mold, but the flexibility was unstable, and in the range of from 2 cases to 4 cases out of 5 cases of molding, the prepreg was capable of being formed in conformance to the curved mold face.

×: the prepreg exhibited low flexibility for 10 seconds or more after being pressed against the mold, and in the range of from 0 case to 1 case out of 5 cases of molding, the prepreg was capable of being formed in conformance to the curved mold face.

In this regard, the moldability of a prepreg according to the present invention is expressed by evaluating both the adhesion to a mold and the formability on a curved mold face together in a relative manner.

(14) Appearance evaluation of integrally molded article

After the above-mentioned formation of an integrally molded article, the appearance was evaluated according to the below-mentioned four ratings on the basis of the following points of view: the shifting of the prepreg in an inward direction of a molded article, the shifting of the prepreg in a lateral direction of a molded article, the maintenance of fiber straightness, and the existence of a gap generated inside the prepreg.

□: good from all the points of view
∘: poor from one of the points of view
Δ: poor from two of the points of view
×: poor from three or more of the points of view

(15) Joint strength evaluation

Below, the production procedure and evaluation method for a joint strength evaluation sample will be described.

With the (B) thermosetting resin used in the corresponding Example or Comparative Example, a release paper was coated at a resin areal weight of 50 g/m² using a knife coater to produce a thermosetting resin film. This resin film was superposed on both sides of a reinforcing fiber sheet composed of the (A) reinforcing fibers having an areal weight of 193 g/m² and used in the corresponding Example or Comparative Example, and the resulting product was pressed under heating using a heat roll, so that the reinforcing fibers were impregnated with the thermosetting resin. The resulting product was cut to a width of 200 mm and a length of 150 mm to obtain a prepreg (referred to as a lower layer prepreg for convenience). Here, the peak temperature of the lower layer prepreg on a tan δ curve was adjusted to less than 30°C in accordance with the time of contact between the fiber bundle passing through the heat roll and the roll and in accordance with the roll temperature.

Then, in the case of the prepreg in which the (A) reinforcing fibers were arranged unidirectionally, one of the prepregs produced in Examples or Comparative Examples was cut to a size having a width of 200 mm and a length of 150 mm, and the cut prepregs were laminated on seven of the above-mentioned lower layer prepregs as per [0°/90°]2S (the sign S represents mirror symmetry), assuming that the fiber direction of the (A) reinforcing fibers was 0°, and that the direction perpendicular to the fibers was 90°, in such a manner that the face containing the (C) thermoplastic resin appeared as the external face. A laminate was thus obtained.

In addition, in cases where the (A) reinforcing fibers were composed of plain-woven fabric, one of the prepregs produced in Examples or Comparative Examples was cut to a size having a width of 200 mm and a length of 150 mm, and the cut prepregs were laminated on seven of the above-mentioned lower layer prepregs in such a manner that the face containing the (C) thermoplastic resin appeared as the external face. A laminate was thus obtained.

In this regard, in cases where the sample did not contain any face containing the (C) thermoplastic resin, the prepregs were laminated as per [0°/90°]2S (the sign S represents mirror symmetry) without distinguishing the back and front faces, assuming that the direction in which the (A) reinforcing fibers were oriented was 0°, and that the direction perpendicular to the former direction was 90°.

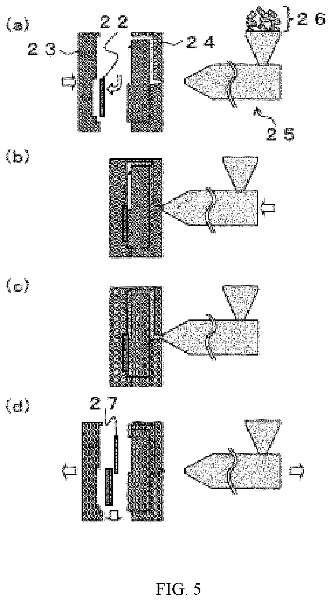

In the evaluation of joining of an integrally molded article obtained by injection molding, the above-mentioned laminate was disposed in an injection molding mold-illustrated in FIG. 5-for production of a joint strength evaluation sample in such a manner that a face of a prepreg produced in Examples or Comparative Examples was the face opposite from the mold side face. Then, an injection molding material (described in the section of Examples and Comparative Examples) was introduced into a mold using an injection molding machine (J150EII-P, manufactured by JSW) to produce an integrally molded article for joint strength evaluation, in which article the injection molding material and the above-mentioned laminate were joined in a region having a width of 200 mm and a length of 12.5 mm. Then, the integrally molded article was placed in an oven, where the (B) thermosetting resin was completely cured by heating treatment. Here, the (D) injection molding material was melted in a heating cylinder by heating to a temperature 30°C higher than the melting point, and injection-molded at a screw speed of 60 rpm, at an injection speed of 90 mm/second, at an injection pressure of 200 MPa, and at a back pressure of 0.5 MPa. The resulting integrally molded article for joint strength evaluation was cut to a size having a width of 180 mm and a length of 172.5 mm in such a manner that the fiber direction of the face was the longitudinal direction of the sample. Then, the cut article was dried in a vacuum oven for 24 hours, underwent tab adhesion in accordance with ISO4587:1995 (JIS K6850 (1994)), and cut to a width of 25 mm to obtain a joint strength evaluation sample.

In the evaluation of joining of an integrally molded article obtained by press molding, the above-mentioned laminate was disposed in a press molding mold for production of a joint strength evaluation sample, in which the mold had the same uneven shape as illustrated in FIG. 5, in such a manner that the face of a prepreg produced in Examples or Comparative Examples was the face opposite from the mold side face. Then, a thermoplastic plate material (described in the section of Examples and Comparative Examples) cut to a width of 200 mm and a length of 150 mm was made ready for use, in which the material had a thickness adjusted through molding under heating and pressing at a temperature 30°C higher than the melting point so that the resulting material could be disposed in a press molding mold. The thermoplastic plate material was disposed in a press molding mold so as to be joined with the above-mentioned laminate in a region having a width of 200 mm and a length of 12.5 mm to produce an integrally molded article for joint strength evaluation. Here, the mold was preliminarily heated to 80°C, and the laminate and thermoplastic plate material were disposed in the mold, and then heated to a temperature 30°C higher than the melting point of the thermoplastic plate material. The resulting material was molded under heating and pressing under each of the following two conditions: a low pressure (0.5 MPa) and a high pressure (5.0 MPa). The resulting integrally molded article for joint strength evaluation was cut to a size having a width of 180 mm and a length of 172.5 mm in such a manner that the fiber direction of the face was the longitudinal direction of the sample. Then, the cut article was dried in a vacuum oven for 24 hours, underwent tab adhesion in accordance with ISO4587:1995 (JIS K6850 (1994)), and cut to a width of 25 mm to obtain a joint strength evaluation sample.

The resulting joint strength evaluation sample was used according to ISO4587:1995 (JIS K6850 (1994)) to measure the tensile shearing joint strength in a room-temperature environment (23°C), so that the joint strength was evaluated.

Here, in this evaluation, the prepreg in Examples and Comparative Examples was prepared along the longitudinal direction of the (A) reinforcing fibers in cases where the reinforcing fibers in the prepreg were arranged unidirectionally, and the prepreg in Examples and Comparative Examples was prepared along the longitudinal direction of the reinforcing fiber woven fabric in cases where the prepreg contained the woven fabric.

(16) Coefficient of variation

The variation in joint strength is expressed as a coefficient of variation. Five measurements were made in the above-mentioned joint strength evaluation, the standard deviation and the average value were calculated, and the coefficient of variation was determined in accordance with the following formula.

$$\text{Coefficient of variation (\%)} = \text{standard deviation} / \text{average value} \times 100$$

(Comparative Example 1)

Using A-1 as the (A) reinforcing fibers and B-1 as the (B) thermosetting resin, a prepreg having the peak temperature on a tan $\delta$ curve as listed in Table 1 was produced in accordance with Method III for production. Then, the prepreg was inserted in an injection molding mold, and underwent insert injection molding with D-1 used as an injection molding material. In addition, a prepreg separately produced in the above-mentioned Method III for production was inserted in a press molding mold, and underwent press molding with E-1 used as a thermoplastic plate material. The characteristics and moldability of the prepreg and the evaluation results of the integrally molded article obtained by injection molding and the integrally molded article obtained by press molding are tabulated in Table 1.

The moldability was good, but the joint strength of each of the integrally molded articles obtained was extremely low.

(Example 1)

Using A-1 as the (A) reinforcing fibers, B-1 as the (B) thermosetting resin, and C-4 as the (C) thermoplastic resin, a prepreg having the peak temperature on a tan $\delta$ curve as listed in Table 1 was produced in accordance with Method II for production. Then, the prepreg was inserted in an injection molding mold, and underwent insert injection molding with D-2 used as an injection molding material. In addition, a prepreg separately produced in the above-mentioned Method II for production was inserted in a press molding mold, and underwent press molding with E-2 used as a thermoplastic plate material. The characteristics and moldability of the prepreg and the evaluation results of the integrally molded article obtained by injection molding and the integrally molded article obtained by press molding are tabulated in Table 1.

The moldability was good, and the joint strength of each of the integrally molded articles was satisfactory enough for such an article.

(Comparative Example 2, Comparative Examples 4, Example 2, and Examples 6 to 9)

Using the (A) reinforcing fibers, the (B) thermosetting resin, and the (C) thermoplastic resin that are listed in Table 1, a prepreg having the peak temperature on a tan δ curve as listed in Table 1 was produced in accordance with Method I for production. Then, the prepreg was inserted in an injection molding mold, and underwent insert injection molding with D-1 used as an injection molding material. In addition, a prepreg separately produced in the above-mentioned Method I for production was inserted in a press molding mold, and underwent press molding with E-1 used as a thermoplastic plate material. The characteristics and moldability of the prepreg and the evaluation results of the integrally molded article obtained by injection molding and the integrally molded article obtained by press molding are tabulated in Table 1.

In Comparative Example 2, the fiber straightness of the integrally molded article was significantly disordered, and in Comparative Example 4, the prepreg moved in the mold, failing to be disposed at an intended position. On the other hand, in Examples 6 to 9, the joint strength was high. In Examples 7 and 8 in particular, the adhesion to a mold and the moldability expressed in terms of the formability on a curved mold face were also good, and at the same time, an extremely high joint strength was exhibited. Additionally, in Example 9, the handleability in a room-temperature environment (23°C) was excellent, the moldability was poorer than in Examples 6 to 8, but the fiber straightness of the integrally molded article obtained by high-pressure press molding was not disordered, and the appearance was better than in Example 7 and Example 8 in which press molding was performed under the same conditions.

(Comparative Example 3)

Using A-2 as the (A) reinforcing fibers, B-1 as the (B) thermosetting resin, and C-2 as the (C) thermoplastic resin, a prepreg was produced in accordance with Method I for production. Then, the prepreg was inserted in an injection molding mold, and underwent insert injection molding with D-1 used as an injection molding material. In addition, a prepreg separately produced in the above-mentioned Method I for production was inserted in a press molding mold, and underwent press molding with E-1 used as a thermoplastic plate material. The characteristics and moldability of the prepreg and the evaluation results of the integrally molded article obtained by injection molding and the integrally molded article obtained by press molding are tabulated in Table 1.

In any of the integrally molded articles, the fibers were disordered from the end of the prepreg disposed.

(Examples 3 to 4)

Using the (A) reinforcing fibers, the (B) thermosetting resin, and the (C) thermoplastic resin that are listed in Table 1, a prepreg having the peak temperature on a tan δ curve as listed in Table 1 was produced in accordance with Method I for production. Then, the prepreg was inserted in an injection molding mold, and underwent insert injection molding with D-1 used as an injection molding material. In addition, a prepreg separately produced in the above-mentioned Method I for production was inserted in a press molding mold, and underwent press molding with E-1 used as a thermoplastic plate material. The characteristics and moldability of the prepreg and the evaluation results of the integrally molded article obtained by injection molding and the integrally molded article obtained by press molding are tabulated in Table 1.

In Example 3, the prepreg had high stiffness but at the same time, had good adhesion to a mold, and was capable of being integrally molded. The integrally injection-molded articles in Examples 3 and 4 each had a portion in which the fiber straightness was slightly impaired, but the articles exhibited excellent joint strength. On the other hand, the fiber straightness of the integrally molded article obtained by high-pressure press molding was significantly disordered and spread along with the flow of the resin, and thus, the article failed to retain its shape.

(Example 5)

Using A-2 as the (A) reinforcing fibers, B-1 as the (B) thermosetting resin, and C-2 as the (C) thermoplastic resin, a prepreg having the peak temperature on a tan δ curve as listed in Table 1 was produced in accordance with Method I for production. Then, the prepreg was inserted in an injection molding mold, and underwent insert injection molding with D-1 used as an injection molding material. In addition, a prepreg separately produced in the above-mentioned Method I for production was inserted in a press molding mold, and underwent press molding with E-1 used as a thermoplastic plate material. The characteristics and moldability of the prepreg and the evaluation results of the integrally molded article obtained by injection molding and the integrally molded article obtained by press molding are tabulated in Table 1.

The integrally injection-molded article, which was capable of holding fiber straightness better than in Comparative Example 3, had excellent appearance, but the appearance of the integrally molded article obtained by high-pressure press molding had fiber straightness significantly disordered from the end of the prepreg.

(Examples 10 to 12)

Using A-1 as the (A) reinforcing fibers, B-1 as the (B) thermosetting resin, and C-4 as the (C) thermoplastic resin, a prepreg having the peak temperature adjusted on a tan δ curve as listed in Table 2 was produced in accordance with Method II for production. Then, the prepreg was inserted in an injection molding mold, and underwent insert injection molding with D-2 used as an injection molding material. In addition, a prepreg separately produced in the above-mentioned Method II for production was inserted in a press molding mold, and underwent press molding with E-2 used as a thermoplastic plate material. The characteristics and moldability of the prepreg and the evaluation results of the integrally molded article obtained by injection molding and the integrally molded article obtained by press molding are tabulated in Table 2.

With any of the integrally molded articles, the moldability expressed in terms of the adhesion to a mold and the formability on a curved mold face was good, and the appearance was good. In particular, Example 11 had good moldability and appearance, and at the same time, exhibited extremely high joint strength. In the case of high-pressure press molding, however, the appearance was better in Example 12 than in Example 11.

(Examples 13 to 19)

Using the (A) reinforcing fibers, the (B) thermosetting resin, and the (C) thermoplastic resin that are listed in Table 2, a prepreg having the peak temperature on a tan δ curve as listed in Table 2 was produced in accordance with Method I for production. Then, the prepreg was inserted in an injection molding mold, and underwent insert injection molding with an injection molding material listed in Table 2. In addition, a prepreg separately produced in the above-mentioned Method I for production was inserted in a press molding mold, and underwent press molding with a thermoplastic plate material listed in Table 2. The characteristics and moldability of the prepreg and the evaluation results of the integrally molded article obtained by injection molding and the integrally molded article obtained by press molding are tabulated in Table 2.

The handleability of each of the prepregs in a room-temperature environment (23°C) was good, and the handleability in each of Examples 15 to 16 and Examples 18 to 19 in particular was even better. In addition, each of the integrally molded articles was capable of exhibiting both moldability and appearance, and exhibited high joint strength. With high-pressure press molding in Examples 13 and 14 and Example 17, the fiber straightness was significantly disordered at the end of the prepreg. On the other hand, in Example 16 and Example 19 in which press molding was performed under the same conditions, the appearance was extremely good, and the shape retention capability was excellent.

(Examples 20 to 25)

Using the (A) reinforcing fibers, the (B) thermosetting resin, and the (C) thermoplastic resin that are listed in Table 3, a prepreg having the peak temperature on a tan δ curve as listed in Table 3 was produced in accordance with Method I for production. Then, the prepreg was inserted in an injection molding mold, and underwent insert injection molding with D-1 used as an injection molding material. In addition, a prepreg separately produced in the above-mentioned Method I for production was inserted in a press molding mold, and underwent press molding with E-1 used as a thermoplastic plate material. The characteristics and moldability of the prepreg and the evaluation results of the integrally molded article obtained by injection molding and the integrally molded article obtained by press molding are tabulated in Table 3.

Each of the integrally molded articles in Examples 20 to 24 was capable of exhibiting both moldability and appearance, and in addition, exhibited high joint strength. The joint strength in Example 20 and Examples 22 to 24 in particular was even higher. In addition, the variation in joint strength among the integrally molded articles in Example 21 and Example 22 was extremely low. The integrally molded articles in Example 25 were less good than in Example 20 and Examples 22 to 24, but gained joint strength satisfactory enough for an integrally molded article.

(Examples 26 to 30)

Using the (A) reinforcing fibers, the (B) thermosetting resin, the (C) thermoplastic resin, and Methods for production that are listed in Table 3, a prepreg having the peak temperature on a tan δ curve as listed in Table 3 was produced. Then, the prepreg was inserted in an injection molding mold, and underwent insert injection molding with an injection molding material listed in Table 3. In addition, a prepreg separately produced in the above-mentioned Method I for production was inserted in a press molding mold, and underwent press molding with a thermoplastic plate material listed in Table 3. The characteristics and moldability of the prepreg and the evaluation results of the integrally molded article obtained by injection molding and the integrally molded article obtained by press molding are tabulated in Table 3.

In addition, each of the different integrally molded articles made of different combinations of materials was capable of exhibiting both moldability and appearance, and exhibited even higher joint strength.

(Conclusion)

The integrally molded article in Example 1 resulted in having excellent joint strength, compared with Comparative Example 1. This is because a face of the prepreg in Example 1 was coated with the (C) thermoplastic resin having thermal weldability, thus making it possible for the prepreg to be integrated with an injection material. On the other hand, it was seemingly possible that the prepreg in Comparative Example 1, not coated with the (C) thermoplastic resin, was integrated with an injection material. However, the prepreg had such extremely low joint strength as to be easily peeled away with human power.

Comparison between Comparative Examples 2 and 4 and Examples 6 to 19 verified that having a peak temperature of 30°C or more and 100°C or less on a tan δ curve contributed to good adhesion and formability on an injection molding mold and excellent moldability. This is conceivably because the prepreg exhibits suitable adhesiveness and flexibility on a mold, and this effect made it possible to obtain an integrally molded article having excellent appearance and joint strength. In particular, Examples 7, 8, 15, and 18 exhibited an excellent balance between the moldability and the appearance of the integrally molded article, and the peak temperature of approximately 60°C or more and 80°C or less on a tan δ curve conceivably made it possible to hold the straightness of the (A) reinforcing fibers, and at the same time, to obtain good adhesion and flexibility by virtue of heating from the face of the mold.

In Comparative Examples 2 and 3, the results were generally the same. This is conceivably because, even in cases where the (A) reinforcing fibers of the prepreg were woven fabrics, having a peak temperature of less than 30 degrees on a tan δ curve caused the fiber straightness at the end of the prepreg to be impaired by injection pressure during insert injection molding in the same manner as with the unidirectional arranged fibers. In this regard, this tendency was observed by comparison between Examples 4 and 5.

In Example 5, the integrally molded article had excellent appearance, compared with Comparative Example 3. This is conceivably because, even in cases where the (A) reinforcing fibers were woven fabrics, allowing the (B) thermosetting resin to have a specific peak temperature on a tan δ curve made it easy to hold the fiber straightness.

Comparison between Examples 6, 7, and 9 and Examples 10 to 12 verified that different methods of producing a prepreg made it possible to obtain the same degree of moldability and appearance of an integrally molded article by virtue of adjusting the peak temperature on a tan δ curve.

Compared with Example 1, Example 7 resulted in exhibiting even higher joint strength after integrated molding, and this is conceivably because allowing the (A) reinforcing fibers to exist in the boundary face between and in both of the (B) thermosetting resin and the (C) thermoplastic resin made it possible to exhibit firm joining force.

In Example 2, the moldability was not better than in Example 7, and this is conceivably because the prepreg had low flexibility and was rigid. Furthermore, in Example 3, the moldability was poorer than in Example 7, and this is conceivably because the (C) thermoplastic resin had a large thickness and low flexibility. In Example 4, the adhesion to a curved mold face and the formability were excellent, but the appearance of the integrally molded article was slightly poorer than in Example 7. This is conceivably because the perpendicular-to-fiber tensile strength of the prepreg was low, thus causing the fiber straightness to be impaired by injection pressure during molding under heating and pressing.

Comparison between Examples 6 to 9, Examples 13 to 16, and Examples 17 to 19 verified that all the prepregs produced using different materials made it possible to obtain the same degree of moldability and appearance of integrated molding by virtue of adjusting the peak temperature on a tan δ curve. In addition, it was verified that the prepreg having a peak temperature of more than 60°C on a tan δ had even better handleability in a room-temperature environment (23°C). It was suggested that, in cases where the peak temperature on a tan δ curve was more than 80°C, the moldability expressed in terms of adhesion to a mold and formability on a curved mold face was poor, but the fiber straightness was less disordered even during high-pressure press molding, and the shape retention capability was excellent.

The joint strength in Examples 20 to 25 was enhanced further than in Examples 6 to 9. That is, what is conceivable is that, because the compound contained in a face of the (A) reinforcing fibers contributed to exhibiting higher affinity with the (B) thermosetting resin and the (C) thermoplastic resin, high joint strength was exhibited at the boundary face between the (B) thermosetting resin and the (C) thermoplastic resin, wherein the (A) reinforcing fibers existed in the boundary face between and in both of the (B) thermosetting resin and the (C) thermoplastic resin. In addition, it was verified that the integrally molded articles in Example 20 and Examples 22 to 24 had even higher joint strength, and that the preferable surface free energy of the (A) reinforcing fibers was 20 to 40 mJ/m$^2$.

Comparison between Examples 20 to 25 and Examples 26 to 30 has verified that, even in cases where the (A) reinforcing fibers, the (B) thermosetting resin, and the (C) thermoplastic resin each differ among the Examples, the (B) thermosetting resin and the (C) thermoplastic resin exhibit higher affinity via the compound contained in a face of the (A) reinforcing fibers, and make it possible to obtain high joint strength.

[Table 1]

| | Unit | Comparative Example 1 | Comparative Example 2 | Comparative Example 3 | Comparative Example 4 | Example 1 | Example 2 | Example 3 | Example 4 | Example 5 | Example 6 | Example 7 | Example 8 | Example 9 |
|---|---|---|---|---|---|---|---|---|---|---|---|---|---|---|
| Constituents of prepreg | (A) Reinforcing fiber | | A-1 | A-1 | A-2 | A-1 | A-1 | A-1 | A-1 | A-1 | A-2 | A-1 | A-1 | A-1 | A-1 |
| | (B) Thermosetting resin | | B-1 | B-1 | B-1 | B-1 | B-1 | B-1 | B-2 | B-2 | B-1 | B-1 | B-1 | B-1 | B-1 |
| | (C) Thermoplastic resin | | No | C-2 | C-2 | C-2 | C-4 | C-2 | C-3 | C-1 | C-2 | C-2 | C-2 | C-2 | C-2 |
| Method of producing prepreg | | | III | I | I | I | II | I | I | I | I | I | I | I | I |
| Peak temperature on tan δ curve of thermosetting resin | °C | 60 | 5 | 5 | 140 | 62 | 96 | 32 | 32 | 33 | 34 | 57 | 73 | 97 |
| Whether reinforcing fibers exist in boundary face between and in both of thermosetting resin and thermoplastic resin | - | No | Yes | Yes | Yes | No | Yes | Yes | Yes | Yes | Yes | Yes | Yes | Yes |
| Drapability | - | 6.0 | 20.2 | 20.2 | 2.1 | 5.9 | 2.8 | 3.3 | 11.3 | 11.5 | 11.0 | 7.3 | 5.5 | 3.8 |
| Whether there is any peak having height of 5° or more on loss angle δ curve of region containing reinforcing fibers and thermosetting resin | - | Yes | Yes | Yes | No | Yes | No | Yes | Yes | Yes | Yes | Yes | Yes | No |
| Characteristics of prepreg | Thickness T of whole prepreg | μm | 125 | 125 | 125 | 125 | 125 | 125 | 125 | 125 | 125 | 125 | 125 | 125 | 125 |
| | Thickness Ts of thermosetting resin layer | μm | 100 | 100 | 100 | 100 | 100 | 100 | 55 | 115 | 100 | 100 | 100 | 100 | 100 |
| | Thickness Tp of thermoplastic resin layer | μm | 0 | 25 | 25 | 25 | 25 | 25 | 70 | 10 | 25 | 25 | 25 | 25 | 25 |
| | Tp / T x 100 | % | 0 | 20 | 20 | 20 | 20 | 20 | 56 | 8 | 20 | 20 | 20 | 20 | 20 |
| | Perpendicular-to-fiber tensile strength | MPa | 1.8 | 0.2 | - | 5.3 | 1.9 | 3.5 | 0.8 | 0.2 | - | 0.4 | 0.9 | 2.0 | 2.5 |
| Handleability in room-temperature environment (23°C) | - | □ | × | × | □ | □ | □ | △ | △ | △ | △ | ○ | □ | □ |
| Moldability | Adhesion to mold | - | ○ | □ | □ | × | ○ | △ | □ | □ | □ | □ | ○ | ○ | △ |
| | Formability on curved mold face | - | ○ | □ | □ | × | ○ | △ | △ | □ | □ | □ | ○ | ○ | △ |

(continued)

| | | | | Comparative Example 1 | Comparative Example 2 | Comparative Example 3 | Comparative Example 4 | Example 1 | Example 2 | Example 3 | Example 4 | Example 5 | Example 6 | Example 7 | Example 8 | Example 9 |
|---|---|---|---|---|---|---|---|---|---|---|---|---|---|---|---|---|
| Integrally molded article | Injection molding | (D) Injection molding material | | D-1 | D-1 | D-1 | D-1 | D-2 | D-1 | D-1 | D-1 | D-1 | D-1 | D-1 | D-1 | D-1 |
| | | Appearance | - | ○ | × | × | Avaluative | ○ | □ | △ | △ | △ | △ | ○ | ○ | □ |
| | | Joint strength | MPa | 1.0 | Avaluative | Avaluative | Avaluative | 14.0 | 23.2 | 24.3 | 24.1 | 23.8 | 25.8 | 27.2 | 26.5 | 25.3 |
| | Press molding | (E) Press molding material | | E-1 | E-1 | E-1 | E-1 | E-2 | E-1 | E-1 | E-1 | E-1 | E-1 | E-1 | E-1 | E-1 |
| | | Molding pressure, 0.5 MPa | Appearance - | ○ | × | × | Avaluative | ○ | □ | △ | △ | △ | △ | ○ | ○ | □ |
| | | | Joint strength MPa | 1.0 | Avaluative | Avaluative | Avaluative | 13.9 | 23.2 | 24.1 | 24.1 | 23.9 | 25.9 | 27.3 | 26.5 | 25.4 |
| | | Molding pressure, 5.0MPa | Appearance - | ○ | × | × | Avaluative | ○ | □ | × | × | × | × | △ | ○ | □ |
| | | | Joint strength MPa | 1.1 | Avaluative | Avaluative | Avaluative | 13.7 | 23.4 | Avaluative | Avaluative | Avaluative | Avaluative | 26.5 | 26.3 | 25.6 |

22

[Table 2]

| | | | | Example 10 | Example 11 | Example 12 | Example 13 | Example 14 | Example 15 | Example 16 | Example 17 | Example 18 | Example 19 |
|---|---|---|---|---|---|---|---|---|---|---|---|---|---|
| Constituents of prepreg | (A) Reinforcing fiber | | | A-1 | A-1 | A-1 | A-1 | A-1 | A-2 | A-1 | A-1 | A-1 | A-1 |
| | (B) Thermosetting resin | | | B-1 | B-1 | B-1 | B-1 | B-1 | B-1 | B-1 | B-2 | B-2 | B-2 |
| | (C) Thermoplastic resin | | | C-4 | C-4 | C-4 | C-5 | C-5 | C-5 | C-5 | C-2 | C-2 | C-2 |
| Method of producing prepreg | | | | II | II | II | I | I | I | I | I | I | I |
| Characteristics of prepreg | Peak temperature on tan $\delta$ curve of thermosetting resin | | °C | 35 | 59 | 94 | 48 | 60 | 70 | 95 | 42 | 80 | 98 |
| | Whether reinforcing fibers exist in boundary face between and in both of thermosetting resin and thermoplastic resin | | - | Yes | Yes | Yes | Yes | Yes | Yes | Yes | Yes | Yes | Yes |
| | Drapability | | - | 10.8 | 7.0 | 4.0 | 8.2 | 6.9 | 5.8 | 3.2 | 10.0 | 4.2 | 3.4 |
| | Whether there is any peak having height of 5° or more on loss angle $\delta$ curve of region containing reinforcing fibers and thermosetting resin | | - | Yes | Yes | No | Yes | Yes | Yes | No | Yes | Yes | No |
| | Thickness T of whole prepreg | | $\mu$m | 125 | 125 | 125 | 125 | 125 | 125 | 125 | 125 | 125 | 125 |
| | Thickness Ts of thermosetting resin layer | | $\mu$m | 100 | 100 | 100 | 100 | 100 | 100 | 100 | 100 | 100 | 100 |
| | Thickness Tp of thermoplastic resin layer | | $\mu$m | 25 | 25 | 25 | 25 | 25 | 25 | 25 | 25 | 25 | 25 |
| | Tp / T $\times$ 100 | | % | 20 | 20 | 20 | 20 | 20 | 20 | 20 | 20 | 20 | 20 |
| | Perpendicular-to-fiber tensile strength | | MPa | 0.4 | 0.9 | 2.5 | 0.8 | 1.1 | - | 2.5 | 1.0 | 1.2 | 2.2 |
| Handleability in room-temperature environment (23°C) | | | - | Δ | ○ | □ | ○ | ○ | □ | □ | ○ | □ | □ |
| Moldability | Adhesion to mold | | - | α | ○ | Δ | □ | ○ | ○ | Δ | □ | ○ | Δ |
| | Formability on curved mold face | | - | □ | ○ | Δ | □ | ○ | ○ | Δ | □ | ○ | Δ |
| Integrally molded article | Injection molding | (D) Injection molding material | | D-2 | D-2 | D-2 | D-3 | D-3 | D-3 | D-3 | D-1 | D-1 | D-1 |
| | | Appearance | - | Δ | ○ | □ | ○ | ○ | ○ | □ | Δ | ○ | □ |
| | | Joint strength | MPa | 25.6 | 27.0 | 25.6 | 25.0 | 27.5 | 28.3 | 27.0 | 26.5 | 27.0 | 26.3 |
| | Press molding | (E) Press molding material | | E-2 | E-2 | E-2 | E-3 | E-3 | E-3 | E-3 | E-1 | E-1 | E-1 |
| | | Molding pressure, 0.5 MPa | Appearance | - | Δ | ○ | □ | ○ | ○ | ○ | □ | Δ | ○ | □ |
| | | | Joint strength | MPa | 25.6 | 27.1 | 25.7 | 25.2 | 27.8 | 28.5 | 27.2 | 26.6 | 27.2 | 26.3 |
| | | Molding pressure, 5.0MPa | Appearance | - | x | Δ | □ | Δ | Δ | ○ | □ | x | Δ | □ |
| | | | Joint strength | MPa | Avaluative | 26.6 | 25.8 | 26.5 | 27.0 | 28.4 | 27.3 | Avaluative | 26.5 | 26.6 |

[Table 3]

| | | | Example 20 | Example 21 | Example 22 | Example 23 | Example 24 | Example 25 | Example 26 | Example 27 | Example 28 | Example 29 | Example 30 |
|---|---|---|---|---|---|---|---|---|---|---|---|---|---|
| Constituents of prepreg | (A) Reinforcing fiber | | A-3 | A-4 | A-5 | A-6 | A-7 | A-8 | A-9 | A-5 | A-5 | A-6 | A-7 |
| | (B) Thermosetting resin | | B-1 | B-1 | B-1 | B-1 | B-1 | B-1 | B-1 | B-2 | B-1 | B-1 | B-1 |
| | (C) Thermoplastic resin | | C-2 | C-2 | C-2 | C-2 | C-2 | C-2 | C-2 | C-2 | C-4 | C-5 | C-5 |
| Surface free energy of reinforcing fiber | | $mJ/m^2$ | 20 | 18 | 32 | 32 | 33 | 9 | 32 | 32 | 32 | 32 | 33 |
| Method of producing prepreg | | | I | I | I | I | I | I | I | I | II | I | I |
| Characteristics of prepreg | Peak temperature on tan $\delta$ curve of thermosetting resin | °C | 73 | 75 | 71 | 72 | 69 | 70 | 70 | 73 | 71 | 72 | 70 |
| | Whether reinforcing fibers exist in boundary face between and in both of thermosetting resin and thermoplastic resin | - | Yes | Yes | Yes | Yes | Yes | Yes | Yes | Yes | Yes | Yes | Yes |
| | Drapability | - | 5.3 | 5.1 | 5.7 | 5.7 | 5.6 | 5.0 | 5.1 | 5.6 | 5.8 | 5.2 | 5.0 |
| | Whether there is any peak having height of 5° or more on loss angle $\delta$ curve of region containing reinforcing fibers and thermosetting resin | - | Yes | Yes | Yes | Yes | Yes | Yes | Yes | Yes | Yes | Yes | Yes |
| | Thickness T of whole prepreg | $\mu$m | 125 | 125 | 125 | 125 | 125 | 125 | 125 | 125 | 125 | 125 | 125 |
| | Thickness Ts of thermosetting resin layer | $\mu$m | 100 | 100 | 100 | 100 | 100 | 100 | 100 | 100 | 100 | 100 | 100 |
| | Thickness Tp of thermoplastic resin layer | $\mu$m | 25 | 25 | 25 | 25 | 25 | 25 | 25 | 25 | 25 | 25 | 25 |
| | Tp / T × 100 | % | 20 | 20 | 20 | 20 | 20 | 20 | 20 | 20 | 20 | 20 | 20 |
| | Perpendicular-to-fiber tensile strength | MPa | 2.2 | 2.0 | 2.4 | 2.4 | 2.4 | 1.8 | - | 2.3 | 2.3 | 2.5 | 2.5 |
| Handleability at normal temperature | | - | □ | □ | □ | □ | □ | □ | □ | □ | □ | □ | □ |

(continued)

| | | | | Example 20 | Example 21 | Example 22 | Example 23 | Example 24 | Example 25 | Example 26 | Example 27 | Example 28 | Example 29 | Example 30 | |
|---|---|---|---|---|---|---|---|---|---|---|---|---|---|---|---|
| Moldability | | Adhesion to mold | - | ○ | ○ | ○ | ○ | ○ | ○ | ○ | ○ | ○ | ○ | ○ | |
| | | Formability on curved mold face | - | ○ | ○ | ○ | ○ | ○ | ○ | ○ | ○ | ○ | ○ | ○ | |
| Integrally molded article | Injection molding | (D) Injection molding material | | D-1 | D-1 | D-1 | D-1 | D-1 | D-1 | D-1 | D-1 | D-2 | D-3 | D-3 | |
| | | Appearance | - | □ | □ | □ | □ | □ | □ | □ | □ | □ | □ | □ | |
| | | Joint strength | MPa | 28.0 | 27.2 | 32.1 | 30.2 | 30.8 | 21.9 | 32.0 | 31.7 | 29.8 | 31.5 | 32.0 | |
| | | Coefficient of variation | % | 5.1 | 2.9 | 3.8 | 6.5 | 7.1 | 9.2 | 3.9 | 3.6 | 3.7 | 6.2 | 6.8 | |
| | Press molding | (E) Press molding material | | E-1 | E-1 | E-1 | E-1 | E-1 | E-1 | E-1 | E-1 | E-2 | E-3 | E-3 | |
| | | Molding pressure, 0.5 MPa | Appearance | - | □ | □ | □ | □ | □ | □ | □ | □ | □ | □ | □ |
| | | | Joint strength | MPa | 28.2 | 27.2 | 32.2 | 30.5 | 30.8 | 22.0 | 32.0 | 31.9 | 30.1 | 31.6 | 32.2 |
| | | | Coefficient of variation | % | 4.9 | 3.0 | 3.7 | 6.4 | 7.1 | 9.4 | 4.1 | 3.5 | 3.8 | 6.2 | 6.7 |

Industrial Applicability

An integrally molded article according to the present invention is favorably used for the following: structure members for aircrafts; windmill vanes; outer panels and seats for automobiles; computer applications such as IC trays and housings for notebook personal computers; sports applications such as golf club shafts and tennis rackets; and the like.

Reference Signs List

1: Prepreg
2: (A) Reinforcing fibers
3: (B) Thermosetting resin
4: (C) Thermoplastic resin
5: Layer in which (A) reinforcing fibers are impregnated with (B) thermosetting resin
6: (A) Reinforcing fibers
7: Resin region containing (B) thermosetting resin
8: Resin region containing (C) thermoplastic resin
9: Boundary face
10: Perpendicular baselines for thickness measurement
11: Prepreg
12: Test bench
13: Point a
14: Point b
15: Point c
16: Draping angle (°)
17: Region in the form of a gentle slope having no ups or downs
18: Position of peak
19: Loss angle $\delta$ curve (with peak, shape 1)
20: Loss angle $\delta$ curve (with peak, shape 2)
21: Loss angle $\delta$ curve (with no peak)
22: Laminate
23: Mold (movable part)
24: Mold (Fixed part)
25: Injection molding machine
26: Material for injection molding
27: Joint strength evaluation sample

**Claims**

1. A prepreg comprising (A) reinforcing fibers, (B) a thermosetting resin, and (C) a thermoplastic resin,

   wherein said (A) reinforcing fibers are impregnated with said (B) thermosetting resin,
   wherein said (C) thermoplastic resin exists in at least a part of a face of said prepreg, and
   wherein said (B) thermosetting resin has a peak at 30°C or more and 100°C or less on a loss tangent (tan $\delta$) curve obtained by dynamic mechanical analysis (DMA).

2. The prepreg according to claim 1, wherein said (A) reinforcing fibers exist in the boundary face between and in both of a resin region containing said (B) thermosetting resin and a resin region containing said (C) thermoplastic resin.

3. The prepreg according to claim 1 or 2, wherein the drapability of said prepreg is 3° or more.

4. The prepreg according to any one of claims 1 to 3, wherein, on a loss angle $\delta$ curve obtained by analyzing, by dynamic mechanical analysis (DMA), the region in which said (A) reinforcing fibers are impregnated with said (B) thermosetting resin, said loss angle $\delta$ curve has a point representing the maximum value, and has a point which represents a loss angle $\delta$ value 5° or more smaller than said maximum value, and which is on the earlier time side of said point representing said maximum value.

**5.** The prepreg according to any one of claims 1 to 3, wherein, on a loss angle $\delta$ curve obtained by analyzing, by dynamic mechanical analysis (DMA), the region in which said (A) reinforcing fibers are impregnated with said (B) thermosetting resin, said loss angle $\delta$ curve does not have a point representing the maximum value, or, if said loss angle $\delta$ curve has a point representing the maximum value, said loss angle $\delta$ curve does not have a point which represents a loss angle $\delta$ value 5° or more smaller than said maximum value, and which is on the earlier time side of said point representing said maximum value.

**6.** The prepreg according to any one of claims 1 to 5, wherein said prepreg has an average thickness of 50 $\mu$m or more and 400 $\mu$m or less, and wherein, assuming that the average thickness is 100%, the resin region containing said (C) thermoplastic resin has an average thickness of 2% or more and 55% or less.

**7.** The prepreg according to any one of claims 1 to 6, wherein said (A) reinforcing fibers are reinforcing fibers having a surface free energy of 10 to 50 mJ/m$^2$, as measured by the Wilhelmy method.

**8.** The prepreg according to any one of claims 1 to 7, wherein said (A) reinforcing fibers are arranged unidirectionally.

**9.** The prepreg according to claim 8, having a tensile strength of 0.3 MPa or more in the direction that is perpendicular to the direction in which said (A) reinforcing fibers are arranged, and is parallel to a face of a sheet.

**10.** A molded article produced using said prepreg according to any one of claims 1 to 9, wherein said (B) thermosetting resin is heat-cured.

**11.** An integrally molded article comprising said prepreg according to any one of claims 1 to 9, wherein a thermoplastic resin is integrally injection-molded or integrally press-molded on a face of said prepreg, the face containing said (C) thermoplastic resin.

**Patentansprüche**

**1.** Prepreg, das (A) Verstärkungsfasern, (B) ein duroplastisches Harz und (C) ein thermoplastisches Harz umfasst,

wobei die (A) Verstärkungsfasern mit dem (B) durchplastischen Harz imprägniert sind,
wobei das (C) thermoplastische Harz in zumindest einem Teil einer Oberfläche des Prepregs vorhanden ist und
wobei das (B) duroplastische Harz auf einer mittels dynamischer mechanischer Analyse (DMA) erhaltenen Verlustfaktorkurve (tan $\delta$) einen Peak bei 30 °C oder mehr und 100 °C oder weniger aufweist.

**2.** Prepreg nach Anspruch 1, wobei die (A) Verstärkungsfasern an der Grenzfläche zwischen einem Harzbereich, der das (B) duroplastische Harz enthält, und einem Harzbereich, der das (C) thermoplastische Harz enthält, und in beiden davon vorhanden sind.

**3.** Prepreg nach Anspruch 1 oder 2, wobei die Drapierbarkeit des Prepregs 3° oder mehr beträgt.

**4.** Prepreg nach einem der Ansprüche 1 bis 3, wobei die Verlustwinkel-$\delta$-Kurve auf einer durch eine Analyse mittels dynamischer mechanischer Analyse (DMA) des Bereichs, in dem die (A) Verstärkungsfasern mit dem (B) duroplastischen Harz imprägniert sind, erhaltenen Verlustwinkel-$\delta$-Kurve einen Punkt aufweist, der den Maximalwert darstellt, und einen Punkt aufweist, der einen Verlustwinkel-$\delta$-Wert von 5° oder mehr unter dem Maximalwert darstellt und der sich auf der zeitmäßig früheren Seite von dem den Maximalwert darstellenden Punkt befindet.

**5.** Prepreg nach einem der Ansprüche 1 bis 3, wobei die Verlustwinkel-$\delta$-Kurve auf einer durch eine Analyse mittels dynamischer mechanischer Analyse (DMA) des Bereichs, in dem die (A) Verstärkungsfasern mit dem (B) duroplastischen Harz imprägniert sind, erhaltenen Verlustwinkel-$\delta$-Kurve keinen Punkt aufweist, der den Maximalwert darstellt, oder, wenn die Verlustwinkel-$\delta$-Kurve einen Punkt aufweist, der den Maximalwert darstellt, diese Verlustwinkel-$\delta$-Kurve keinen Punkt aufweist, der einen Verlustwinkel-$\delta$-Wert von 5° oder mehr unter dem Maximalwert darstellt und der sich auf der zeitmäßig früheren Seite von dem den Maximalwert darstellenden Punkt befindet.

**6.** Prepreg nach einem der Ansprüche 1 bis 5, wobei das Prepreg eine durchschnittliche Dicke von 50 $\mu$m oder mehr und 400 $\mu$m oder weniger aufweist und wobei ausgehend davon, dass die durchschnittliche Dicke 100 % ist, der Harzbereich, der das (C) thermoplastische Harz enthält, eine durchschnittliche Dicke von 2 % oder mehr und 55 % oder weniger aufweist.

7. Prepreg nach einem der Ansprüche 1 bis 6, wobei die (A) Verstärkungsfasern Verstärkungsfasern sind, die eine durch das Wilhelmy-Verfahren gemessene freie Oberflächenenergie von 10 bis 50 mJ/m$^2$ aufweisen.

8. Prepreg nach einem der Ansprüche 1 bis 7, wobei die (A) Verstärkungsfasern in dieselbe Richtung ausgerichtet sind.

9. Prepreg nach Anspruch 8 mit einer Zugfestigkeit von 0,3 MPa oder mehr in der Richtung, die orthogonal zur Richtung ist, in der die (A) Verstärkungsfasern angeordnet sind, und parallel zu einer Oberfläche einer Platte ist.

10. Formgegenstand, der unter Verwendung eines Prepregs nach einem der Ansprüche 1 bis 9 hergestellt wurde, wobei das (B) duroplastische Harz wärmegehärtet ist.

11. Einstückiger Formgegenstand, der ein Prepreg nach einem der Ansprüche 1 bis 9 umfasst, wobei ein thermoplastisches Harz auf einer Oberfläche des Prepregs einstückig spritzgegossen oder einstückig pressgeformt wurde, wobei die Oberfläche das (C) thermoplastische Harz enthält.

**Revendications**

1. Préimprégné comprenant (A) des fibres de renforcement, (B) une résine thermodurcissable, et (C) une résine thermoplastique,

   dans lequel lesdites fibres de renforcement (A) sont imprégnées de ladite résine thermodurcissable (B),
   dans lequel ladite résine thermoplastique (C) existe dans au moins une partie d'une face dudit préimprégné, et
   dans lequel ladite résine thermodurcissable (B) présente un pic à 30°C ou plus et à 100°C ou moins sur une courbe de tangente de perte (tan $\delta$) obtenue par analyse mécanique dynamique (DMA).

2. Préimprégné selon la revendication 1, dans lequel lesdites fibres de renforcement (A) existent dans la face limite entre et dans à la fois une région de résine contenant ladite résine thermodurcissable (B) et une région de résine contenant ladite résine thermoplastique (C).

3. Préimprégné selon la revendication 1 ou 2, dans lequel la drapabilité dudit préimprégné est de 3° ou plus.

4. Préimprégné selon l'une quelconque des revendications 1 à 3, dans lequel, sur une courbe d'angle de perte $\delta$ obtenue en analysant, par analyse mécanique dynamique (DMA), la région dans laquelle lesdites fibres de renforcement (A) sont imprégnées de ladite résine thermodurcissable (B), ladite courbe d'angle de perte $\delta$ présente un point représentant la valeur maximale, et présente un point qui représente une valeur d'angle de perte $\delta$ de 5° ou plus inférieure à ladite valeur maximale, et qui est sur le côté de temps antérieur dudit point représentant ladite valeur maximale.

5. Préimprégné selon l'une quelconque des revendications 1 à 3, dans lequel, sur une courbe d'angle de perte $\delta$ obtenue en analysant, par analyse mécanique dynamique (DMA), la région dans laquelle lesdites fibres de renforcement (A) sont imprégnées de ladite résine thermodurcissable (B), ladite courbe d'angle de perte $\delta$ ne présente pas de point représentant la valeur maximale, ou, si ladite courbe d'angle de perte $\delta$ présente un point représentant la valeur maximale, ladite courbe d'angle de perte $\delta$ ne présente pas de point qui représente une valeur d'angle de perte $\delta$ de 5° ou plus inférieure à ladite valeur maximale, et qui est sur le côté de temps antérieur dudit point représentant ladite valeur maximale.

6. Préimprégné selon l'une quelconque des revendications 1 à 5, dans lequel ledit préimprégné présente une épaisseur moyenne de 50 $\mu$m ou plus et de 400 um ou moins, et dans lequel, en supposant que l'épaisseur moyenne soit de 100 %, la région de résine contenant ladite résine thermoplastique (C) présente une épaisseur moyenne de 2 % ou plus et de 55 % ou moins.

7. Préimprégné selon l'une quelconque des revendications 1 à 6, dans lequel lesdites fibres de renforcement (A) sont des fibres de renforcement présentant une énergie libre de surface de 10 à 50 mJ/m$^2$, telle que mesurée par le procédé de Wilhelmy.

8. Préimprégné selon l'une quelconque des revendications 1 à 7, dans lequel lesdites fibres de renforcement (A) sont agencées de manière unidirectionnelle.

9. Préimprégné selon la revendication 8, présentant une résistance à la traction de 0,3 MPa ou plus dans la direction qui est perpendiculaire à la direction dans laquelle lesdites fibres de renforcement (A) sont agencées, et est parallèle à une face d'une feuille.

10. Article moulé produit en utilisant ledit préimprégné selon l'une quelconque des revendications 1 à 9, dans lequel ladite résine thermodurcissable (B) est durcie à chaud.

11. Article moulé d'un seul tenant comprenant ledit préimprégné selon l'une quelconque des revendications 1 à 9, dans lequel une résine thermoplastique est moulée par injection d'un seul tenant ou moulée à la presse d'un seul tenant sur une face dudit préimprégné, la face contenant ladite résine thermoplastique (C).

FIG. 1

FIG. 2

FIG. 3

FIG. 4

FIG. 5

**EP 4 082 738 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018161801 A
- JP 10138354 A
- JP 4004107 A
- JP 8259713 A
- WO 2012011487 A1